# EUROPEAN PATENT APPLICATION

(11) **EP 4 714 575 A1**
(43) Date of publication of application: **25.03.2026**
(21) Application number: 25184559.0
(22) Date of filing: 23.06.2025
(51) Int. Cl.: B22F 10/28, B22F 10/36, B33Y 10/00, B33Y 30/00, B33Y 50/02, B22F 10/80, B33Y 50/00, B29C 64/393, B22F 10/366, B22F 12/49

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(30) Priority: 19.07.2024 JP 2024115621
(71) Applicant: Jeol Ltd., Akishima-shi, Tokyo 196-8558 (JP)
(72) Inventor: IIDA, Masahiko, Tokyo, 196-8558 (JP); SATO, Takashi, Tokyo, 196-8558 (JP); KAWAKAMI, Masahiko, Tokyo, 196-8558 (JP); HISAKI, Taku, Tokyo, 196-8558 (JP)
(74) Representative: Boult Wade Tennant LLP

(57) **Abstract**

A three-dimensional PBF-AM apparatus (1) reflecting one aspect of the present invention includes a stage (6), a beam emitter (2), a beam deflector (10), and a control apparatus (30). The beam deflector (10) deflects a beam emitted from the beam emitter (2). The control apparatus (30) controls the beam deflector (10). The control apparatus (30) determines a next irradiation position, which is a position to be irradiated with the beam, next based on a rank assigned to each of unirradiated positions that have not yet been irradiated with the beam. Further, the control apparatus (30) controls the beam deflector (10) to irradiate the next irradiation position with the beam. The rank is determined based on a molten state around each of the unirradiated positions and is updated every time the beam is emitted.

## Description

### BACKGROUND

### Technical Field

The present invention relates to a three-dimensional powder bed fusion additive manufacturing (PBF-AM) apparatus and a three-dimensional PBF-AM method.

### Related Art

In recent years, there is known a three-dimensional PBF-AM apparatus that builds a three-dimensional object by laminating layers in which a powder material is coagulated. The three-dimensional PBF-AM apparatus irradiates the powder material spread on a stage with a beam to melt and coagulate the powder material.

Patent Literature 1 describes a three-dimensional PBF-AM apparatus. The three-dimensional PBF-AM apparatus described in Patent Literature 1 divides a build region of a powder material into a plurality of lines, and performs beam scanning sequentially on each of the lines to melt the powder material in the build region line by line. Furthermore, dummy scanning is performed to scan the beam in a state that does not cause melting of the powder material between an end of beam scanning of an M-th (M is a natural number) line and a start of beam scanning of an (M+1)th line.

### Citation List

### Patent Literature

Patent Literature 1: JP 2022-144439 A

However, in the three-dimensional PBF-AM apparatus described in Patent Literature 1, there is a difference in unevenness, the amount of defects, and the like between molten surfaces at a start and an end of the line. Therefore, a three-dimensional PBF-AM apparatus that forms a uniform molten surface is desired.

An object of the present invention is to provide a three-dimensional PBF-AM apparatus and a three-dimensional PBF-AM method capable of forming a uniform molten surface and improving quality of a three-dimensional structure to be built in consideration of the above problem.

### SUMMARY

In order to solve the above problem and achieve the object of the present invention, a three-dimensional PBF-AM apparatus reflecting one aspect of the present invention includes a stage, a beam emitter, a beam deflector, and a controller. A powder layer formed of a powder material is spread on the stage. The beam emitter emits a beam toward the powder layer spread on the stage. The beam deflector deflects the beam emitted from the beam emitter. A controller (30) controls the beam deflector (10). The controller determines a next irradiation position, which is a position to be irradiated with the beam, next based on a rank assigned to each of unirradiated positions that have not yet been irradiated with the beam. Further, the controller controls the beam deflector to irradiate the next irradiation position with the beam. The rank is determined based on a molten state around each of the unirradiated positions and is updated every time the beam is emitted.

A three-dimensional PBF-AM method reflecting one aspect of the present invention includes a next irradiation position determination step and a beam irradiation step. In the next irradiation position determination step, the controller determines a next irradiation position to be irradiated with a beam based on a rank assigned to each of unirradiated positions that have not yet been irradiated with the beam, and a recommended movement range in which a settling time is unnecessary for deflecting the beam. In the beam irradiation step, the controller controls the beam deflector to irradiate the next irradiation position with the beam. The rank is determined based on the molten state around each of the unirradiated positions and updated every time a powder layer is irradiated with the beam.

According to the three-dimensional PBF-AM apparatus and the three-dimensional PBF-AM method configured as described above, it is possible to form the uniform molten surface and improve the quality of the three-dimensional structure to be built.

### BRIEF DESCRIPTION OF DRAWINGS

FIG. 1 is a schematic configuration diagram illustrating a three-dimensional PBF-AM apparatus according to an embodiment;
FIG. 2 is a block diagram illustrating a functional configuration of a beam position controller of the three-dimensional PBF-AM apparatus according to the embodiment;
FIGS. 3A and 3B are views for describing a first example of a recommended movement range according to the embodiment;
FIGS. 4A and 4B are views for describing a second example of the recommended movement range according to the embodiment;
FIG. 5 is a view for describing transitions of the recommended movement range when the end of beam irradiation is close according to the embodiment;
FIGS. 6A and 6B are views illustrating first and second examples of ranking according to the embodiment;
FIGS. 7A and 7B are views illustrating third and fourth examples of the ranking according to the embodiment;
FIGS. 8A and 8B are views illustrating fifth and sixth examples of the ranking according to the embodiment;
FIGS. 9A and 9B are views illustrating seventh and eighth examples of the ranking according to the embodiment;
FIG. 10 is a view illustrating a first example of a correction table according to the embodiment;
FIG. 11 is a view illustrating a second example of the correction table according to the embodiment;
FIG. 12 is a view illustrating a relationship between a priority and a correction amount with respect to a rank according to the embodiment;
FIG. 13 is a view for describing a beam irradiation order based on the ranks according to the embodiment;
FIG. 14 is a view for describing the beam irradiation order based on the ranks according to the embodiment;
FIG. 15 is a view for describing the beam irradiation order based on the ranks according to the embodiment;
FIG. 16 is a view for describing a beam irradiation order based on the ranks and the recommended movement range according to the embodiment;
FIG. 17 is a view for describing the beam irradiation order based on the ranks and the recommended movement range according to the embodiment;
FIG. 18 is a view for describing the beam irradiation order based on the ranks and the recommended movement range according to the embodiment;
FIG. 19 is a view for describing the beam irradiation order based on the ranks and the recommended movement range according to the embodiment;
FIG. 20 is a view for describing the beam irradiation order based on the ranks and the recommended movement range according to the embodiment;
FIG. 21 is a view for describing the beam irradiation order based on the ranks and the recommended movement range according to the embodiment;
FIG. 22 is a view for describing the beam irradiation order based on the ranks and the recommended movement range according to the embodiment; and
FIG. 23 is a flowchart illustrating an example of beam irradiation processing according to the embodiment.

### DETAILED DESCRIPTION

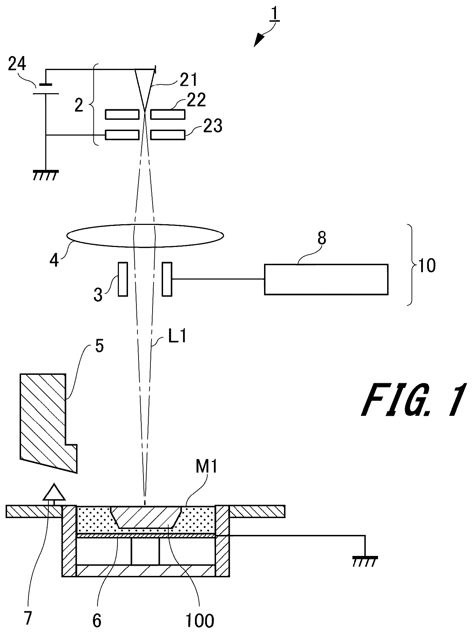

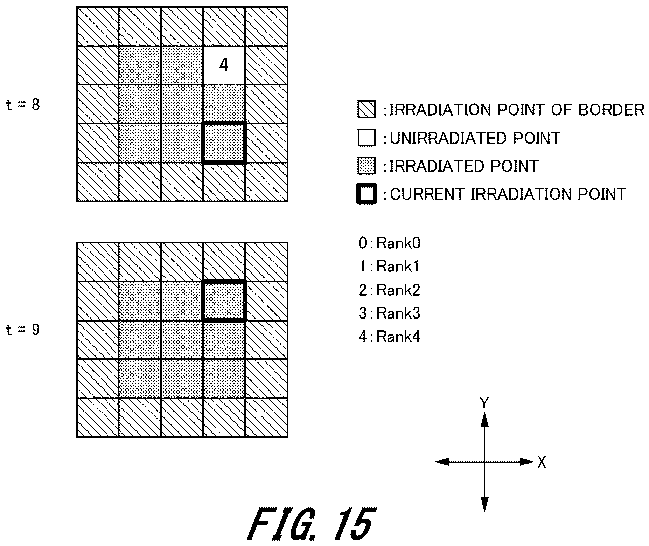

Hereinafter, an embodiment of a three-dimensional PBF-AM apparatus and a three-dimensional PBF-AM method of the present invention will be described with reference to FIGS. 1 to 23. In the drawings, common members in drawings are denoted by the same reference numerals.

### [Three-Dimensional PBF-AM apparatus]

First, a configuration of a three-dimensional PBF-AM apparatus according to the embodiment will be described with reference to FIG. 1.

FIG. 1 is an explanatory diagram schematically illustrating the three-dimensional PBF-AM apparatus according to the embodiment.

A three-dimensional PBF-AM apparatus 1 illustrated in FIG. 1 is an apparatus that irradiates a powder material with an electron beam to melt the powder material, and laminates layers of the coagulated powder material to build a three-dimensional object. As illustrated in FIG. 1, the three-dimensional PBF-AM apparatus 1 includes an electron gun 2 that emits an electron beam L1, a lens 4, a powder material storage 5, a stage 6, a powder layer raking arm 7, and a beam deflector 10. The electron gun 2 corresponds to a beam emitter according to the present invention.

The electron gun 2, a deflection amplifier 3, the lens 4, the powder material storage 5, the stage 6, and the powder layer raking arm 7 are disposed in a build chamber (not illustrated). A vacuum pump is connected to the build chamber. The vacuum pump removes gas inside the build chamber. Thus, the internal space of the build chamber is evacuated.

The electron gun 2 includes an emitter 21, an extraction electrode 22, and an acceleration electrode 23. The emitter 21 and the acceleration electrode 23 are connected to an acceleration power source 24. The extraction electrode 22 is connected to an extraction potential generator (not illustrated). The extraction potential generator applies an extraction potential to the extraction electrode 22. When the extraction potential is applied, the extraction electrode 22 extracts electrons from the emitter 21.

The acceleration electrode 23 accelerates the electrons extracted from the emitter 21 by an acceleration potential applied by the acceleration power source 24 to generate the electron beam L1. The acceleration electrode 23 directs the generated electron beam L1 toward the lens 4 and the deflection amplifier 3.

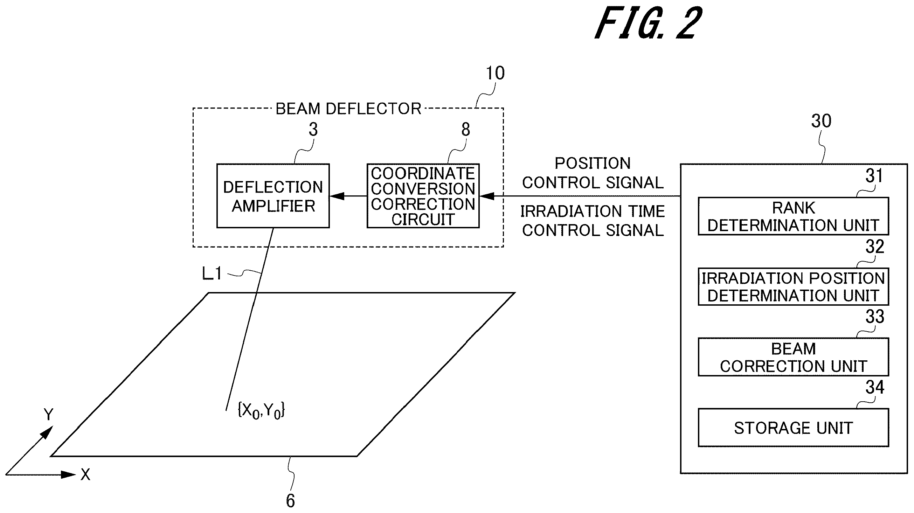

The deflection amplifier 3, which will be described later, of the beam deflector 10 is disposed between the electron gun 2 and the stage 6. Note that a detailed configuration of the beam deflector 10 will be described later with reference to FIG. 2.

The lens 4 is disposed between the deflection amplifier 3 and the electron gun 2. The lens 4 focuses the electron beam L1 emitted from the electron gun 2 by electromagnetic action. Then, the lens 4 brings the electron beam L1 into focus on the stage 6.

The stage 6 is formed in a substantially flat plate shape. The stage 6 is supported so as to be movable in the vertical direction by a driving apparatus (not illustrated). A powder material M1 is supplied from the powder material storage 5 to one surface of the stage 6. Examples of the powder material M1 include metal such as titanium, aluminum, or iron, and solid materials such as ceramics and organic resins.

The powder layer raking arm 7 is disposed near the stage 6. The powder layer raking arm 7 is supported so as to be movable in the horizontal direction on the one surface of the stage 6 by a movement mechanism (not illustrated). When the powder layer raking arm 7 moves in the horizontal direction on the one surface of the stage 6, the powder material M1 is spread on the one surface of the stage 6 at a predetermined height (for example, a diameter of one particle of the powder material M1).

When a layer (powder layer) of the powder material M1 spread on the stage 6 is irradiated with the electron beam L1, the powder material M1 melts and then coagulates. After the powder material M1 melts and coagulates, the stage 6 is further lowered downward in the vertical direction by the driving apparatus (not illustrated). Then, the powder material storage 5 supplies a new powder material M1, and the powder layer raking arm 7 spreads the powder material M1 at a predetermined height.

### [Beam Deflector]

Next, a configuration of the beam deflector 10 will be described with reference to FIG. 2.

FIG. 2 is a block diagram illustrating a functional configuration of the beam deflector 10.

As illustrated in FIG. 2, the beam deflector 10 includes the deflection amplifier 3 and a coordinate conversion correction circuit 8. The deflection amplifier 3 is disposed between the electron gun 2 and the stage 6. The deflection amplifier 3 deflects the electron beam L1 emitted from the electron gun 2 to a predetermined position of the stage 6.

The coordinate conversion correction circuit 8 controls the operation of the deflection amplifier 3. The coordinate conversion correction circuit 8 is connected to a control apparatus 30. For example, a personal computer (PC) can be adopted as the control apparatus 30. The control apparatus 30 transmits a position command signal and an irradiation time command signal to the coordinate conversion correction circuit 8. The position command signal is a signal indicating a coordinate position indicating an irradiation position of the electron beam L1. The irradiation time command signal is a signal indicating an irradiation time of the electron beam L1.

The coordinate conversion correction circuit 8 generates an amplifier control signal according to the commanded coordinate position and irradiation time based on the received position command signal and irradiation time command signal. The coordinate conversion correction circuit 8 operates the deflection amplifier 3 on the basis of the generated amplifier control signal. Thus, the deflection amplifier 3 deflects the electron beam L1 emitted from the electron gun 2 to the commanded coordinate position of the stage 6.

The beam deflector 10 needs to take a long settling time of a magnetic field for greatly deflecting the electron beam L1. Therefore, a deviation occurs between a beam irradiation coordinate on a control command and an actual beam irradiation coordinate. In order to prevent this deviation, a waiting time (so-called settling time) for eliminating the deviation is required after the electron beam L1 is deflected. A fatal deviation between the control command and the actual beam irradiation coordinate is eliminated by providing the settling time. However, if the settling time is increased, a build time becomes longer.

### [Controller]

Next, a functional configuration of the control apparatus 30 will be described with reference to FIG. 2.

The control apparatus 30 includes a rank determination unit 31, an irradiation position determination unit 32, a beam correction unit 33, and a storage unit 34.

The rank determination unit 31 determines a rank of each of unirradiated positions based on a molten state of the powder material M1 in each of layers of the powder material M1. The unirradiated position is a position that has not yet been irradiated with the electron beam L1. The rank determination unit 31 discriminates the unirradiated positions by coordinates. A position (coordinate) of each of the layers of the powder material M1 irradiated with the electron beam L1 is stored in the storage unit 34. Ranking of each of the unirradiated positions performed by the rank determination unit 31 will be described later.

The irradiation position determination unit 32 determines a position (hereinafter, referred to as a "next irradiation position") to be irradiated with the electron beam L1 next based on the rank of each of the unirradiated positions determined by the rank determination unit 31. A higher rank has a higher priority. Therefore, the irradiation position determination unit 32 determines an unirradiated position assigned with the highest rank among a plurality of the ranks then as the next irradiation position.

The irradiation position determination unit 32 preferentially selects the next irradiation position from a range (hereinafter, referred to as a "recommended movement range") in which the settling time is unnecessary for deflecting the electron beam L1. The irradiation position determination unit 32 selects the next irradiation position based on a predetermined parameter when a plurality of the unirradiated position assigned with the highest rank among the plurality of ranks then are present in the recommended movement range. Examples of the parameter include prioritizing one located at the upper left, prioritizing one located at the lower right, and selection in a random manner.

When there is no unirradiated position assigned with the highest rank among the plurality of ranks then inside the recommended movement range, the irradiation position determination unit 32 determines an unirradiated position assigned with the highest rank outside the recommended movement range as the next irradiation position. When a plurality of the unirradiated position assigned with the highest rank are present outside the recommended movement range, the irradiation position determination unit 32 determines one having the shortest distance from the center of the recommended movement range as the next irradiation position.

Further, the irradiation position determination unit 32 selects the next irradiation position based on a predetermined parameter when there are a plurality of unirradiated positions with the highest rank having the shortest distance from the center of the recommended movement range. The parameter may be the same as the parameter used in the case where the plurality of unirradiated position assigned with the highest rank are present in the recommended movement range, or may be separately set to determine the next irradiation position outside the recommended movement range.

The beam correction unit 33 corrects the electron beam L1 according to a rank of the next irradiation position. The beam correction unit 33 can correct at least one of an intensity of the electron beam L1, a diameter of the electron beam L1, and an irradiation time of the electron beam L1. The beam correction unit 33 does not correct the electron beam L1 when irradiating an unirradiated position assigned with a specific rank with the electron beam L1. The specific rank is assigned to, for example, an unirradiated position where there is no molten site in the periphery thereof.

The beam correction unit 33 controls the amount of a beam current supplied to the electron gun 2 to correct the intensity of the electron beam L1. The beam correction unit 33 controls a position of the lens 4 to correct the diameter of the electron beam L1. The beam correction unit 33 generates the irradiation time command signal and transmits the irradiation time instruction signal to the beam deflector 10.

### [Recommended Movement Range]

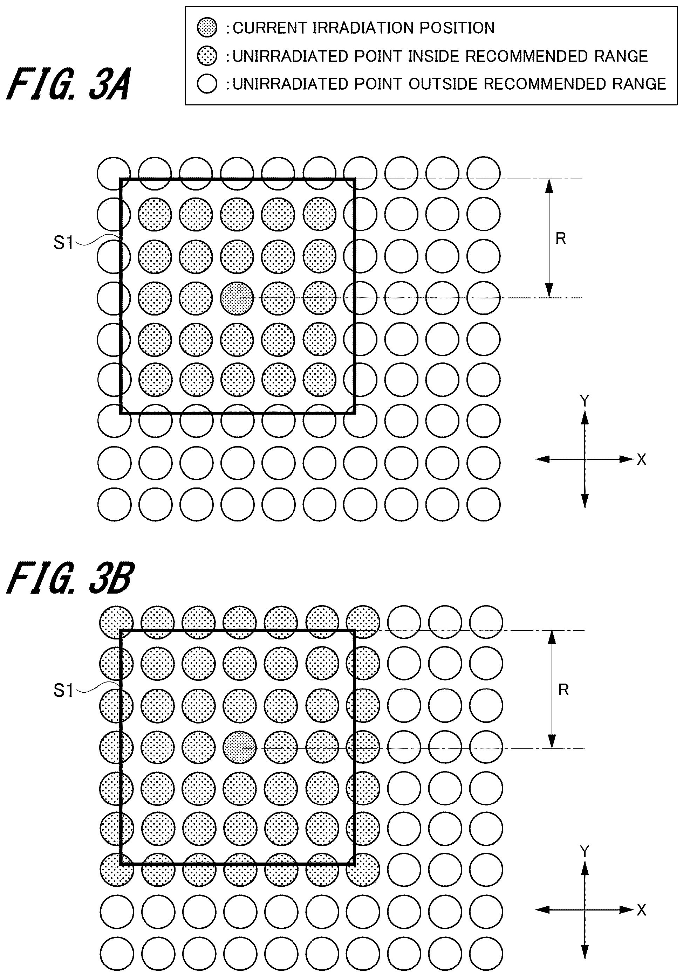

Next, the recommended movement range used when the irradiation position determination unit 32 determines the next irradiation position will be described with reference to FIGS. 3A to 5.

### (First Example of Recommended Movement Range)

FIGS. 3A and 3B are views illustrating a recommended movement range S1 that is a first example of the recommended movement range. Points to be irradiated with the electron beam L1 illustrated in FIGS. 3A and 3B are arranged in a first direction X parallel to the horizontal direction and a second direction Y parallel to the horizontal direction and substantially perpendicular to the first direction X. In FIGS. 3A and 3B, the first direction X is a left-right direction, and the second direction Y is an up-down direction. Note that the points to be irradiated with the electron beam L1 are not limited to being arranged in two directions that intersect substantially perpendicularly, and may be arranged, for example, in two directions that intersect at any angle.

As illustrated in FIGS. 3A and 3B, the recommended movement range S1 is set to a square. A distance from the center of the recommended movement range S1 to each side is, for example, a predetermined distance R. The predetermined distance R is determined according to, for example, a distance that does not require a settling time for deflecting the electron beam L1 emitted from the electron gun 2. In the recommended movement range according to the present invention, the settling time is preferably "0", but can be set in any manner.

When determining an irradiation position of the electron beam L1 for the first time, the irradiation position determination unit 32 does not use the recommended movement range S1. When determining the second and subsequent irradiation positions of the electron beam L1, the irradiation position determination unit 32 sets the most recent (current) beam irradiation position as the center of the recommended movement range S1.

As illustrated in FIG. 3A, the irradiation position determination unit 32 extracts an unirradiated point with the rank having the highest priority from a plurality of unirradiated positions (hereinafter, referred to as "unirradiated points") inside the recommended movement range S1. As illustrated in FIG. 3B, the irradiation position determination unit 32 may extract the unirradiated point with the rank having the highest priority from a plurality of unirradiated points included even slightly inside the recommended movement range S1.

The irradiation position determination unit 32 determines the next irradiation position from one or a plurality of extracted unirradiated points. In a case where there is no unirradiated point with the rank having the highest priority among the plurality of unirradiated points inside the recommended movement range S1, the irradiation position determination unit 32 determines one of a plurality of unirradiated points outside the recommended movement range S1 as the next irradiation position.

### (Second Example of Recommended Movement Range)

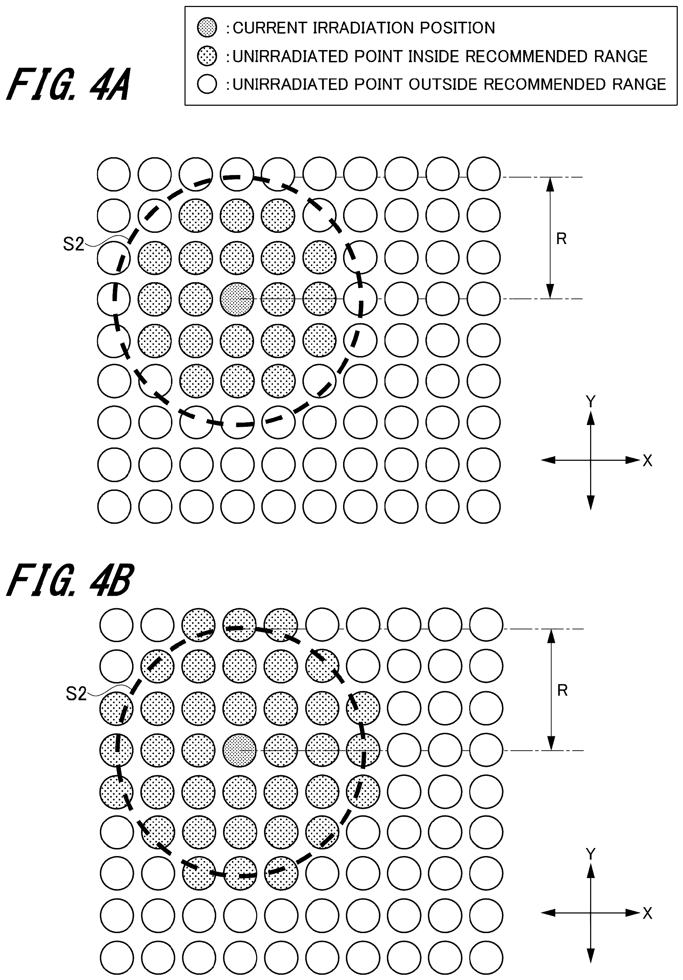

FIGS. 4A and 4B are views illustrating a recommended movement range S2 that is a second example of the recommended movement range. The points irradiated with the electron beam L1 illustrated in FIGS. 4A and 4B are arranged in the first direction X and the second direction Y.

As illustrated in FIGS. 4A and 4B, the recommended movement range S2 is set to a circle. A radius of the recommended movement range S2 is, for example, the predetermined distance R. The predetermined distance R is determined according to, for example, a distance that does not require a settling time for deflecting the electron beam L1 emitted from the electron gun 2.

When determining an irradiation position of the electron beam L1 for the first time, the irradiation position determination unit 32 does not use the recommended movement range S2. When determining the second and subsequent irradiation positions of the electron beam L1, the irradiation position determination unit 32 uses the most recent (current) beam irradiation position as the center of the recommended movement range S2.

As illustrated in FIG. 4A, the irradiation position determination unit 32 extracts an unirradiated point with the rank having the highest priority from a plurality of unirradiated positions (hereinafter, referred to as "unirradiated points") inside the recommended movement range S2. As illustrated in FIG. 4B, the irradiation position determination unit 32 may extract the unirradiated point with the rank having the highest priority from a plurality of unirradiated points included even slightly inside the recommended movement range S2.

The irradiation position determination unit 32 determines the next irradiation position from one or a plurality of extracted unirradiated points. In a case where there is no unirradiated point with the rank having the highest priority among the plurality of unirradiated points inside the recommended movement range S2, the irradiation position determination unit 32 determines one of a plurality of unirradiated points outside the recommended movement range S2 as the next irradiation position.

### (Next Irradiation Position when End of Beam Irradiation Is Close)

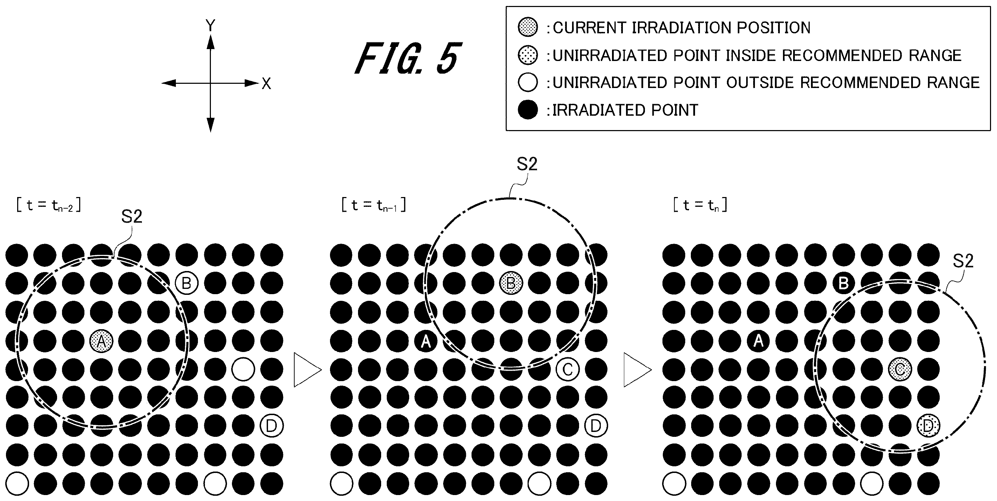

Next, a transition of the recommended movement range when the end of beam irradiation is close will be described with reference to FIG. 5.

FIG. 5 is a view for describing transitions of the recommended movement range when the end of beam irradiation is close.

At an irradiation timing tₙ₋₂ illustrated in FIG. 5, a point A is irradiated with the electron beam L1. Then, five unirradiated points remain. Ranks of the remaining five unirradiated points tie. The irradiation position determination unit 32 sets the center of the recommended movement range S2 to the point A. At the irradiation timing tₙ₋₂, all points in the recommended movement range S2 have been irradiated. Therefore, the irradiation position determination unit 32 determines an unirradiated point B, closest to the center (point A) of the recommended movement range S2, outside the recommended movement range S2 as the next irradiation position.

At an irradiation timing tₙ₋₁, the point B is irradiated with the electron beam L1. Then, four unirradiated points remain. Ranks of the remaining four unirradiated points tie. The irradiation position determination unit 32 sets the center of the recommended movement range S2 to the point B. At the irradiation timing tₙ₋₁, all points in the recommended movement range S2 have been irradiated. Therefore, the irradiation position determination unit 32 determines an unirradiated point C, closest to the center (point B) of the recommended movement range S2, outside the recommended movement range S2 as the next irradiation position.

At an irradiation timing tₙ, the point C is irradiated with the electron beam L1. Then, three unirradiated points remain. Ranks of the remaining three unirradiated points tie. The irradiation position determination unit 32 sets the center of the recommended movement range S2 to the point C. At the irradiation timing tₙ, an unirradiated point D is included in the recommended movement range S2. Therefore, the irradiation position determination unit 32 determines the unirradiated point D as the next irradiation position.

### [Ranking]

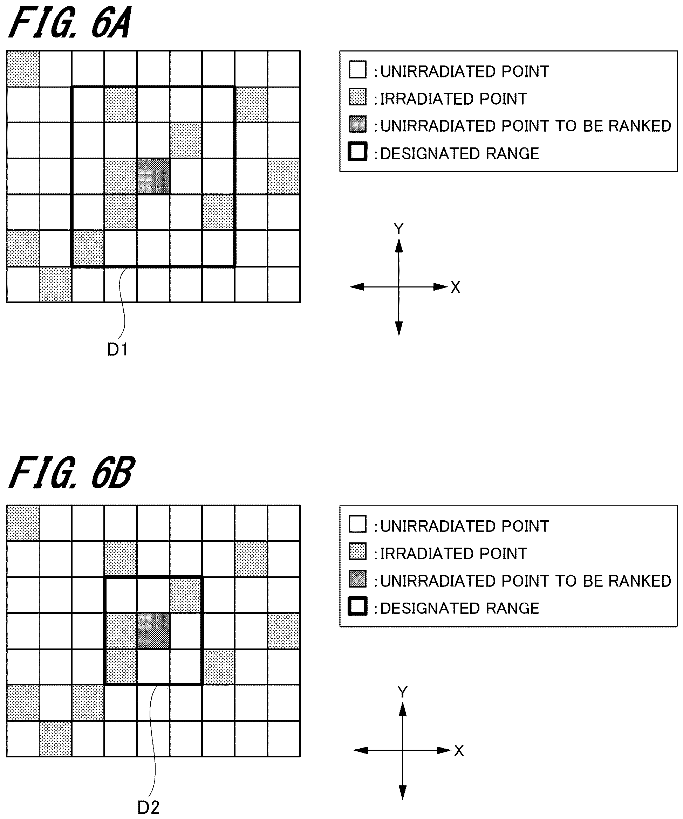

Next, ranking performed by the rank determination unit 31 will be described with reference to FIGS. 6A to 9B. As described above, the rank determination unit 31 determines the ranks (performs ranking) of each of the unirradiated points based on the molten state around the unirradiated point. Points to be irradiated with the electron beam L1 illustrated in FIGS. 6A to 9B are arranged in the first direction X and the second direction Y.

### (First Example of Ranking)

FIG. 6A is a view illustrating a first example of the ranking. In the first example of the ranking, a total number of points (hereinafter, "irradiated points") irradiated in a designated range D1 centered on an unirradiated point is set as a rank number. Note that the designated range according to the present invention can be appropriately set.

The designated range D1 is set to a square. Lengths of the designated range D1 in the first direction X and the second direction Y correspond to five points irradiated with the electron beam L1. Therefore, the number of points irradiated with the electron beam L1 in the designated range D1 is 25. In the example illustrated in FIG. 6A, there are six irradiated points in the designated range D1. Therefore, the rank determination unit 31 determines a rank of the unirradiated point that is the center of the designated range D1 as "Rank6".

In a case where the number of irradiated points in the designated range D1 is zero which is the smallest, the rank determination unit 31 determines the rank of the unirradiated point, which is the center of the designated range D1, as "Rank0". On the other hand, in a case where the number of irradiated points in the designated range D1 is 24 which is the largest, the rank of the unirradiated point, which is the center of the designated range D1, is determined as "Rank24". That is, in the first example of the ranking, ranks are divided into 25 types of "Rank0" to "Rank24".

The larger the number of irradiated points in the designated range D1, the lower the priority of the rank determined in the first example of the ranking. Therefore, "Rank0" has the highest priority, and "Rank24" has the lowest priority. The rank changes every time an unirradiated point in a layer of the powder material M1 is irradiated with the electron beam L1. Therefore, the rank determination unit 31 updates the rank every time the unirradiated point is irradiated with the electron beam L1.

### (Second Example of Ranking)

FIG. 6B is a view illustrating a second example of the ranking. In the second example of the ranking, a total number of irradiated points inside a designated range D2 centered on an unirradiated point is set as a rank number. The designated range D2 is set to a square. Lengths of the designated range D2 in the first direction X and the second direction Y correspond to three points irradiated with the electron beam L1. Therefore, the number of points irradiated with the electron beam L1 in the designated range D2 is 9.

In the example illustrated in FIG. 6B, there are three irradiated points in the designated range D2. Therefore, the rank determination unit 31 determines a rank of the unirradiated point that is the center of the designated range D2 as "Rank3". In the second example of the ranking, ranks are divided into 9 types of "Rank0" to "Rank8". The larger the number of irradiated points in the designated range D2, the lower the priority of the rank determined in the second example of the ranking. Therefore, "Rank0" has the highest priority, and "Rank8" has the lowest priority.

### (Third Example of Ranking)

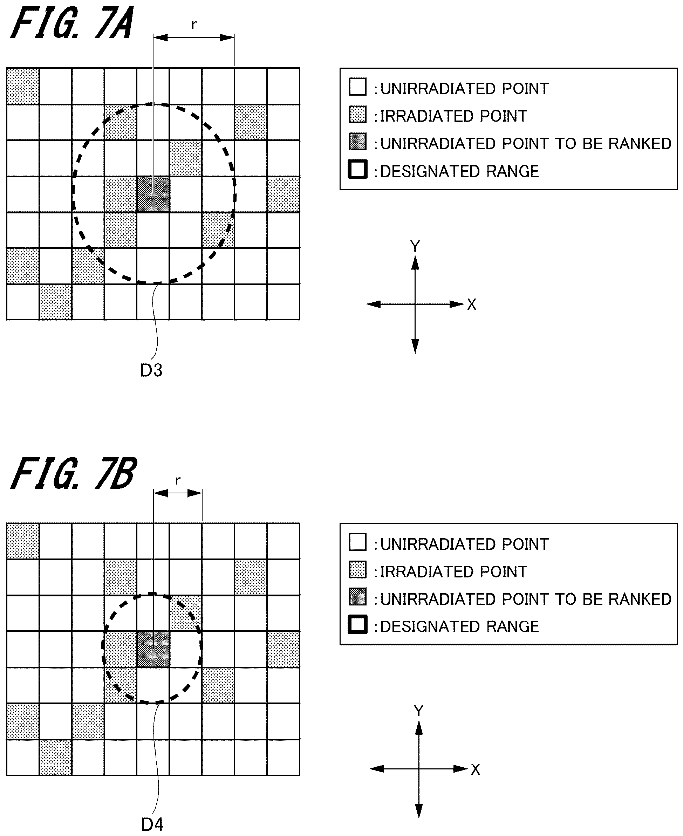

FIG. 7A is a view illustrating a third example of the ranking. In the third example of the ranking, a total number of irradiated points completely included in a designated range D3 centered on an unirradiated point is set as a rank number. The designated range D3 is set to a circle. A radius r of the designated range D3 corresponds to about 2.5 points irradiated with the electron beam L1. The number of points completely included in the designated range D3 is 13.

In the example illustrated in FIG. 7A, there are three irradiated points in the designated range D3. Therefore, the rank determination unit 31 determines a rank of the unirradiated point that is the center of the designated range D3 as "Rank3". In the third example of the ranking, ranks are divided into 13 types of "Rank0" to "Rank12". The larger the number of irradiated points in the designated range D3, the lower the priority of the rank determined in the third example of the ranking. Therefore, "Rank0" has the highest priority, and "Rank8" has the lowest priority.

### (Fourth Example of Ranking)

FIG. 7B is a view illustrating a fourth example of the ranking. In the fourth example of the ranking, a total number of irradiated points completely included in a designated range D4 centered on an unirradiated point is set as a rank number. The designated range D4 is set to a circle. The radius r of the designated range D4 corresponds to about 1.5 points irradiated with the electron beam L1. The number of points completely included in the designated range D4 is 5.

In the example illustrated in FIG. 7B, there is one irradiated point in the designated range D4. Therefore, the rank determination unit 31 determines a rank of the unirradiated point that is the center of the designated range D4 as "Rank1". In the fourth example of the ranking, ranks are divided into 5 types of "Rank0" to "Rank4". The larger the number of irradiated points in the designated range D4, the lower the priority of the rank determined in the fourth example of the ranking. Therefore, "Rank0" has the highest priority, and "Rank4" has the lowest priority.

### (Fifth Example of Ranking)

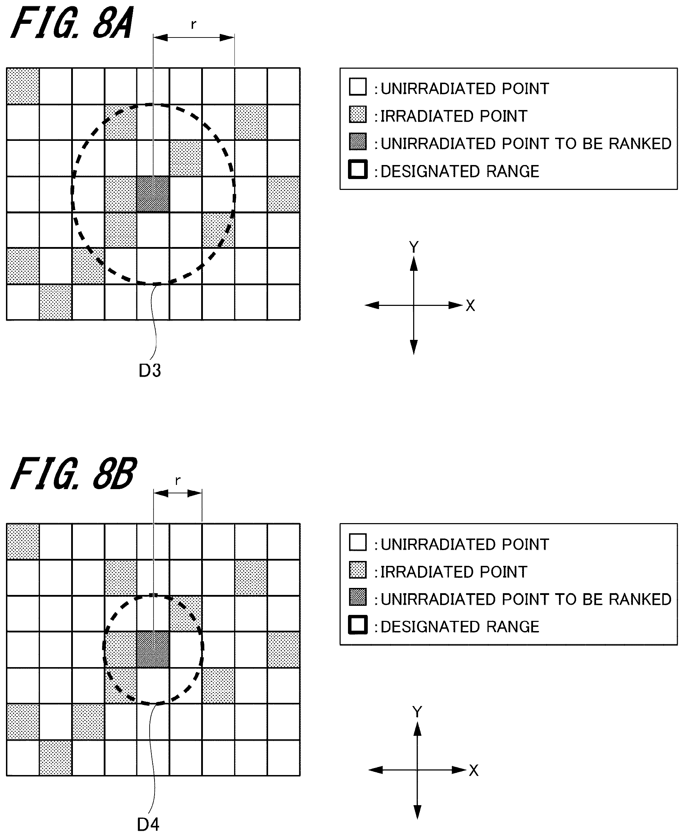

FIG. 8A is a view illustrating a fifth example of the ranking. In the fifth example of the ranking, a total number of irradiated points included even slightly in the designated range D3 centered on the unirradiated point is set as a rank number. The designated range D3 is the same as that illustrated in FIG. 7A. The number of points included even slightly in the designated range D3 is 25.

In the example illustrated in FIG. 8A, there are six irradiated points included even slightly in the designated range D3. Therefore, the rank determination unit 31 determines a rank of the unirradiated point that is the center of the designated range D3 as "Rank6". In the fifth example of the ranking, ranks are divided into 25 types of "Rank0" to "Rank24". The larger the number of irradiated points in the designated range D3, the lower the priority of the rank determined in the fifth example of the ranking. Therefore, "Rank0" has the highest priority, and "Rank24" has the lowest priority.

### (Sixth Example of Ranking)

FIG. 8B is a view illustrating a sixth example of the ranking. In the sixth example of the ranking, a total number of irradiated points included even slightly in the designated range D4 centered on the unirradiated point is set as a rank number. The designated range D4 is the same as that illustrated in FIG. 7B. The number of points included even slightly in the designated range D4 is 9.

In the example illustrated in FIG. 8B, there are three irradiated points included even slightly in the designated range D4. Therefore, the rank determination unit 31 determines a rank of the unirradiated point that is the center of the designated range D4 as "Rank3". In the sixth example of the ranking, ranks are divided into 9 types of "Rank0" to "Rank8". The larger the number of irradiated points in the designated range D4, the lower the priority of the rank determined in the sixth example of the ranking. Therefore, "Rank0" has the highest priority, and "Rank8" has the lowest priority.

### (Seventh Example of Ranking)

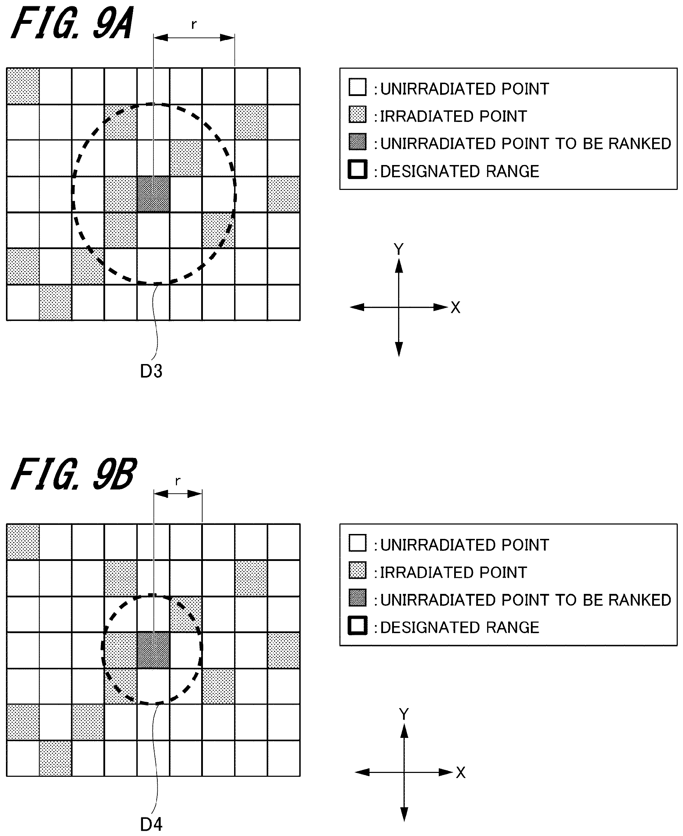

FIG. 9A is a view illustrating a seventh example of the ranking. In the seventh example of the ranking, a proportion of the area of irradiated points included in the designated range D3 centered on an unirradiated point is set as a rank number. The designated range D3 is the same as that illustrated in FIG. 7A. The proportion of the area of irradiated points included in the designated range D3 is 0% to 100%.

In the example illustrated in FIG. 9A, the proportion of the area of irradiated points included in the designated range D3 is 26%. Therefore, the rank determination unit 31 determines a rank of the unirradiated point that is the center of the designated range D3 as "Rank26". In the seventh example of the ranking, ranks are divided into 101 types of "Rank0" to "Rank100". The larger the area of irradiated points in the designated range D3, the lower the priority of the rank determined in the seventh example of the ranking. Therefore, "Rank0" has the highest priority, and "Rank100" has the lowest priority.

### (Eighth Example of Ranking)

FIG. 9B is a view illustrating an eighth example of the ranking. In the eighth example of the ranking, a rank number is determined based on a proportion of the area of irradiated points included in the designated range D4 centered on an unirradiated point. The designated range D4 is the same as that illustrated in FIG. 7B. Proportions of the area of irradiated points included in the designated range D4 are divided, for example, every 10% into ten ranks.

A proportion of the area of 0% to 9% is "Rank0", and a proportion of the area of 10% to 19% is "Rank1". A proportion of the area of 20% to 29% is "Rank2", and a proportion of the area of 30% to 39% is "Rank3". A proportion of the area of 40% to 49% is "Rank4", and a proportion of the area of 50% to 59% is "Rank5". A proportion of the area of 60% to 69% is "Rank6", and a proportion of the area of 70% to 79% is "Rank7". A proportion of the area of 80% to 89% is "Rank8", and a proportion of the area of 90% to 100% is "Rank9".

In the example illustrated in FIG. 9B, a proportion of the area of irradiated points included in the designated range D4 is 28%. Therefore, the rank determination unit 31 determines a rank of the unirradiated point that is the center of the designated range D4 as "Rank2". The higher the proportion of the area of irradiated points in the designated range D4, the lower the priority of the rank determined in the eighth example of the ranking. Therefore, "Rank0" has the highest priority, and "Rank9" has the lowest priority.

### [Correction Table]

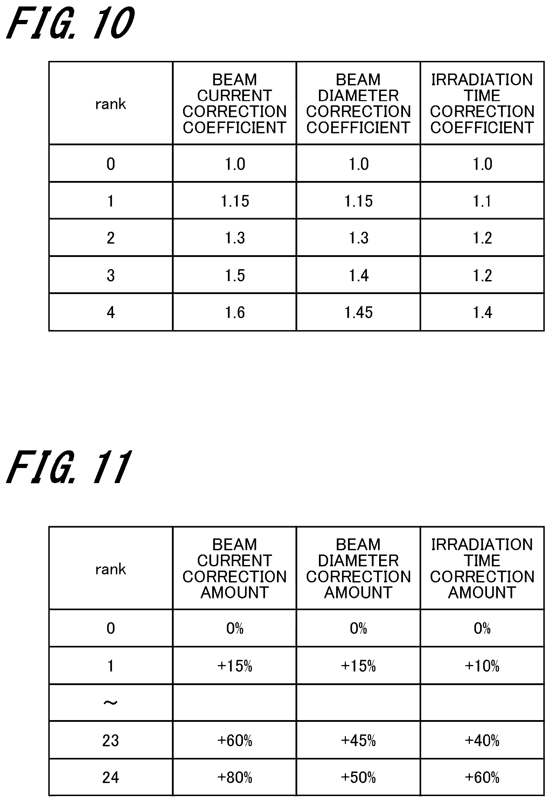

Next, a correction table referred to by the beam correction unit 33 will be described with reference to FIGS. 10 and 11. As described above, the beam correction unit 33 corrects the electron beam L1 according to the rank of the point (next irradiation position) irradiated with the electron beam L1. At that time, the beam correction unit 33 determines various correction values with reference to the correction table stored in the storage unit 34.

### (First Example of Correction Table)

FIG. 10 is a view illustrating a first example of the correction table. The first example of the correction table defines a beam current correction coefficient, a beam diameter correction coefficient, and an irradiation time correction coefficient for each rank.

As illustrated in FIG. 10, the beam current correction coefficient, the beam diameter correction coefficient, and the irradiation time correction coefficient in a case where the next irradiation position is "Rank0" are all "1". Therefore, the beam correction unit 33 does not correct the electron beam L1 when the point of "Rank0" is irradiated with the electron beam L1.

The beam current correction coefficient, the beam diameter correction coefficient, and the irradiation time correction coefficient when the next irradiation position is "Rank1" are defined as, for example, "1.15", "1.15", and "1.1", respectively. Therefore, when the point of "Rank1" is irradiated with the electron beam L1, the beam correction unit 33 corrects a beam current value, a beam diameter, and an irradiation time according to the respective correction coefficients.

Therefore, when a point of "Rank2" or higher is irradiated with the electron beam L1, the beam correction unit 33 corrects the beam current value, the beam diameter, and the irradiation time according to the respective correction coefficients. Note that the correction coefficients are appropriately set according to a powder material or a beam type. The correction coefficients are not limited to the beam current correction coefficient, the beam diameter correction coefficient, and the irradiation time correction coefficient, and may be appropriately set according to other control items to be corrected.

### (Second Example of Correction Table)

FIG. 11 is a view illustrating a second example of the correction table. The second example of the correction table defines a beam current correction amount, a beam diameter correction amount, and an irradiation time correction amount for each rank.

As illustrated in FIG. 11, the beam current correction amount, the beam diameter correction amount, and the irradiation time correction amount in a case where the next irradiation position is "Rank0" are all "0%". Therefore, the beam correction unit 33 does not correct the electron beam L1 when the point of "Rank0" is irradiated with the electron beam L1.

The beam current correction amount, the beam diameter correction amount, and the irradiation time correction amount when the next irradiation position is "Rank1" are defined as, for example, "+15%", "+15%", and "+10%". Therefore, when the point of "Rank1" is irradiated with the electron beam L1, the beam correction unit 33 corrects a beam current value, a beam diameter, and an irradiation time according to the respective correction amounts.

Therefore, when a point of "Rank2" or higher is irradiated with the electron beam L1, the beam correction unit 33 corrects the beam current value, the beam diameter, and the irradiation time according to the respective correction amounts. Note that the correction amounts are appropriately set according to the powder material or the beam type. The correction amounts are not limited to the beam current correction amount, the beam diameter correction amount, and the irradiation time correction amount, and may be appropriately set according to other control items to be corrected.

The number of irradiated points increases around a point irradiated with the electron beam L1 as a rank number increases. As a result, the point irradiated with the electron beam L1 is less likely to be warmed. Therefore, as illustrated in FIGS. 10 and 11, the beam correction unit 33 performs correction so as to increase the beam current value, the beam diameter, and the irradiation time as the rank number increases.

Note that the correction coefficients and the correction amounts according to the present invention do not necessarily increase the beam current value and the like. That is, the correction coefficients may be defined to be less than 1, or the correction amounts may be defined to be negative values.

### [Priority and Correction Amount]

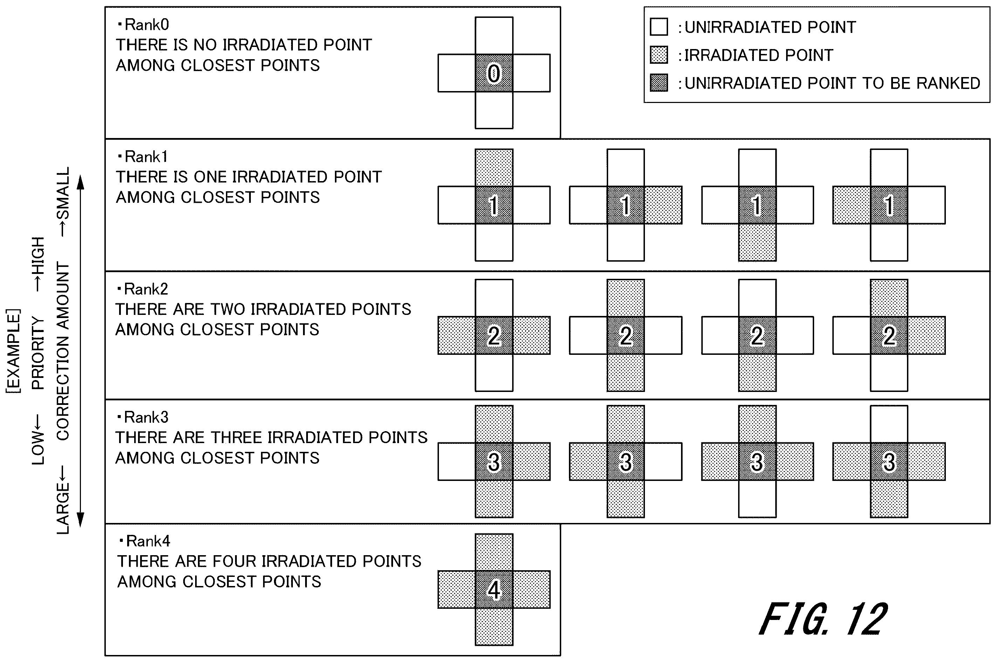

Next, a relationship between the priority and the correction amount with respect to the rank will be described with reference to FIG. 12.

FIG. 12 is a view illustrating the relationship between the priority and the correction amount with respect to the rank.

In an example of ranking illustrated in FIG. 12, a total number of irradiated points among four points adjacent to an unirradiated point to be ranked in the first direction X and the second direction Y is set as a rank number. In the example of the ranking illustrated in FIG. 12, ranks are divided into five types of "Rank0" to "Rank4".

As illustrated in FIG. 12, the priority decreases as the rank number increases. The irradiation position determination unit 32 determines the next irradiation position from those having the highest priority. For example, when "Rank0" is not assigned to all unirradiated points in a layer of the powder material M1, the irradiation position determination unit 32 determines whether or not there is one assigned with "Rank1" among all the unirradiated points in the layer of the powder material M1. In a case where there are unirradiated points assigned with "Rank1", the next irradiation position is selected from these unirradiated points.

As illustrated in FIG. 12, the correction amount (correction coefficient) increases as the rank number increases. The beam correction unit 33 refers to the correction table to determine the correction amounts (correction coefficients) according to the rank of the next irradiation position, and corrects the beam current value and the like. An unirradiated point having a larger rank number is selected as the next irradiation position in the latter half of beam irradiation in the layer of the powder material M1. Therefore, the correction amounts of the beam current value and the like increase in the latter half of beam irradiation in the layer of the powder material M1.

### [Beam Irradiation Order based on Ranks]

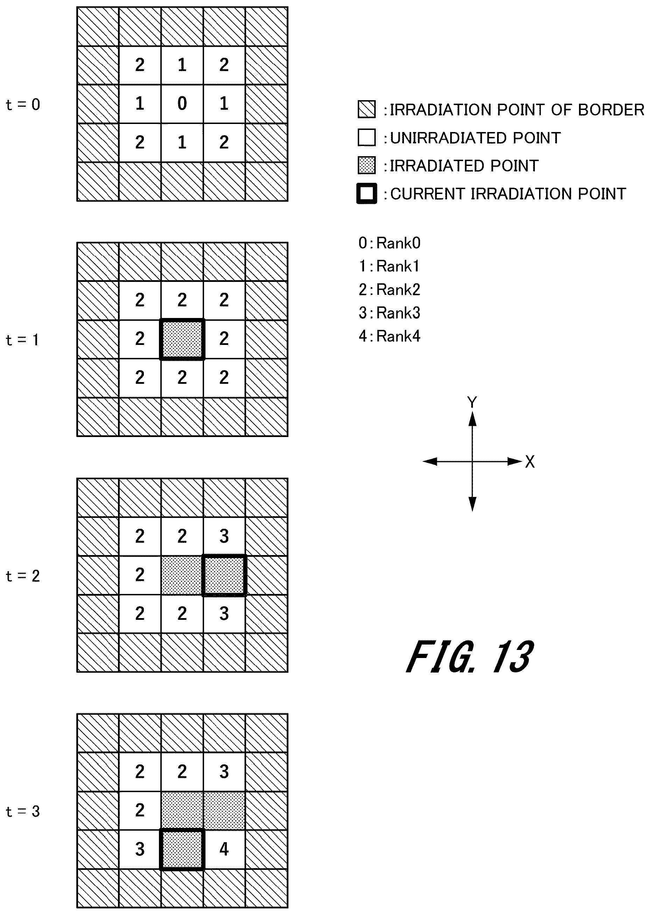

Next, an irradiation order of the electron beam L1 based on the ranks will be described with reference to FIGS. 13 to 15.

FIGS. 13 to 15 are views for describing the beam irradiation order based on the ranks.

Points to be irradiated with the electron beam L1 illustrated in FIGS. 13 to 15 are arranged in the first direction X and the second direction Y. Further, a border is formed in a peripheral edge portion of a region (part to be built) irradiated with the electron beam L1. The border is a wall portion formed by melting and solidifying the powder material M1 as the powder material M1 is irradiated with the electron beam L1.

In FIG. 13, t = 0 is a timing before the first irradiation of the electron beam L1. A total number of a plurality of unirradiated points at t = 0 is nine. Note that the unirradiated point is a point that is scheduled to be irradiated with the electron beam L1 and has not yet been irradiated with the electron beam L1.

Hereinafter, assuming that the first direction X is the left-right direction and the second direction Y is the up-down direction, a plurality of unirradiated points are expressed by terms of "upper", "lower", "left", and "right" with respect to the center. That is, the plurality of unirradiated points at t = 0 are a center unirradiated point, an upper unirradiated point, a lower unirradiated point, a left unirradiated point, a right unirradiated point, an upper left unirradiated point, a lower left unirradiated point, an upper right unirradiated point, and a lower right unirradiated point.

At t = 0, the rank determination unit 31 determines ranks of the unirradiated points. The rank determination unit 31 determines a total number of irradiated points at four upper, lower, left, and right points adjacent to an unirradiated point to be ranked as a rank number. Therefore, the ranks are divided into five types of "Rank0" to "Rank4".

Numbers illustrated in FIGS. 13 to 15 indicate ranks of then unirradiated points. For example, all points adjacent to the center unirradiated point in the up, down, left, and right directions are unirradiated points. Therefore, the rank of the center unirradiated point is "Rank0". Each of the upper unirradiated point, the lower unirradiated point, the left unirradiated point, and the right unirradiated point has one irradiated point adjacent in the up, down, left, or right direction. Therefore, the ranks of the upper unirradiated point, the lower unirradiated point, the left unirradiated point, and the right unirradiated point are "Rank1".

Each of the upper left unirradiated point, the lower left unirradiated point, the upper right unirradiated point, and the lower right unirradiated point has two irradiated points adjacent in the up, down, left, or right direction. Therefore, the ranks of the upper left unirradiated point, the lower left unirradiated point, the upper right unirradiated point, and the lower right unirradiated point are "Rank2". At t = 0, the irradiation position determination unit 32 determines the center unirradiated point of "Rank0" as the next irradiation position.

At t = 1, the beam deflector 10 irradiates the center unirradiated point with the electron beam L1. As a result, the center unirradiated point becomes an irradiated point. The rank determination unit 31 updates the ranks of the unirradiated points. As a result, the ranks of the upper unirradiated point, the lower unirradiated point, the left unirradiated point, and the right unirradiated point change from "Rank1" to "Rank2".

At t = 1, the irradiation position determination unit 32 determines the right unirradiated point of "Rank2" as the next irradiation position. At t = 1, all the remaining unirradiated points are "Rank2". Therefore, the irradiation position determination unit 32 determines the next irradiation position based on a predetermined parameter (in this example, a random manner is employed) from among a plurality of irradiation points of "Rank2".

At t = 2, the beam deflector 10 irradiates the right unirradiated point with the electron beam L1. As a result, the right unirradiated point becomes an irradiated point. The rank determination unit 31 updates the ranks of the unirradiated points. As a result, the ranks of the upper right unirradiated point and the lower right unirradiated point change from "Rank2" to "Rank3". At t = 2, the irradiation position determination unit 32 determines the lower unirradiated point of "Rank2" as the next irradiation position.

At t = 3, the beam deflector 10 irradiates the lower unirradiated point with the electron beam L1. As a result, the lower unirradiated point becomes an irradiated point. The rank determination unit 31 updates the ranks of the unirradiated points. As a result, the rank of the lower right unirradiated point changes from "Rank3" to "Rank4". At t = 3, the irradiation position determination unit 32 determines the upper left unirradiated point of "Rank2" as the next irradiation position.

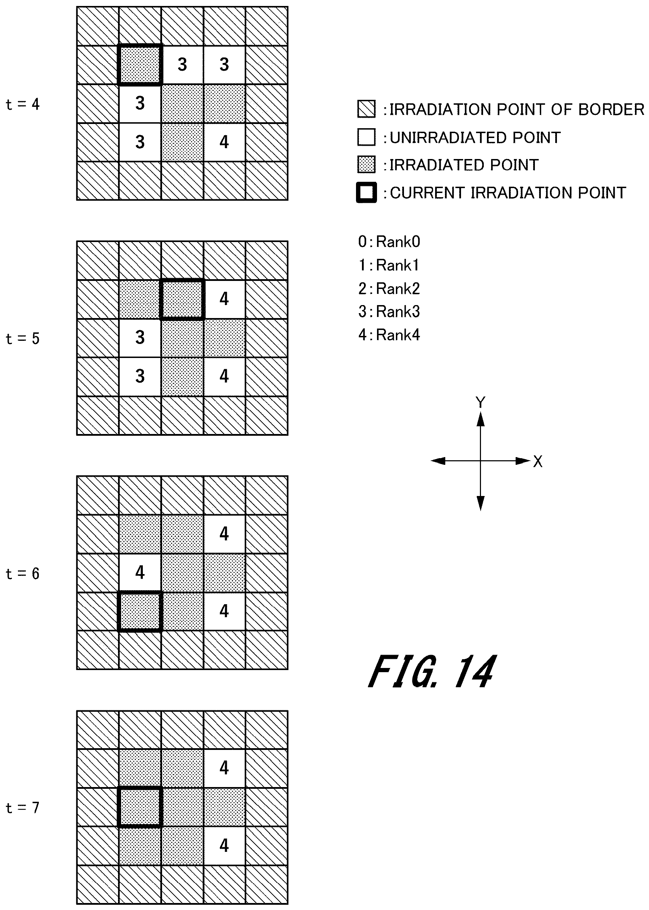

At t = 4 illustrated in FIG. 14, the beam deflector 10 irradiates the upper left unirradiated point with the electron beam L1. As a result, the upper left unirradiated point becomes an irradiated point. The rank determination unit 31 updates the ranks of the unirradiated points. As a result, the ranks of the left unirradiated point and the upper unirradiated point change from "Rank2" to "Rank3". At t = 4, the irradiation position determination unit 32 determines the upper unirradiated point of "Rank3" as the next irradiation position.

At t = 5, the beam deflector 10 irradiates the upper unirradiated point with the electron beam L1. As a result, the upper unirradiated point becomes an irradiated point. The rank determination unit 31 updates the ranks of the unirradiated points. As a result, the rank of the upper right unirradiated point changes from "Rank3" to "Rank4". At t = 5, the irradiation position determination unit 32 determines the lower left unirradiated point of "Rank3" as the next irradiation position.

At t = 6, the beam deflector 10 irradiates the lower left unirradiated point with the electron beam L1. As a result, the lower left unirradiated point becomes an irradiated point. The rank determination unit 31 updates the ranks of the unirradiated points. As a result, the rank of the left unirradiated point changes from "Rank3" to "Rank4". At t = 6, the irradiation position determination unit 32 determines the left unirradiated point of "Rank4" as the next irradiation position.

At t = 7, the beam deflector 10 irradiates the left unirradiated point with the electron beam L1. As a result, the left unirradiated point becomes an irradiated point. The rank determination unit 31 updates the ranks of the unirradiated points. However, the ranks of the upper right unirradiated point and the lower right irradiation point do not change from "Rank4" having the lowest priority. At t = 7, the irradiation position determination unit 32 determines the lower right irradiation point of "Rank4" as the next irradiation position.

At t = 8, the beam deflector 10 irradiates the lower right unirradiated point with the electron beam L1. As a result, the lower right unirradiated point becomes an irradiated point. The rank determination unit 31 updates the ranks of the unirradiated points. However, the rank of the upper right unirradiated point does not change from "Rank4" having the lowest priority. At t = 8, the irradiation position determination unit 32 determines the upper right unirradiated point, which is the last unirradiated point, as the next irradiation position.

At t = 9, the beam deflector 10 irradiates the upper right unirradiated point with the electron beam L1. As a result, the lower right unirradiated point becomes an irradiated point. As a result, all the unirradiated points have been irradiated with the electron beam L1, and beam irradiation processing in one layer of the powder material M1 is completed.

### [Beam Irradiation Order based on Ranks and Recommended Movement Range]

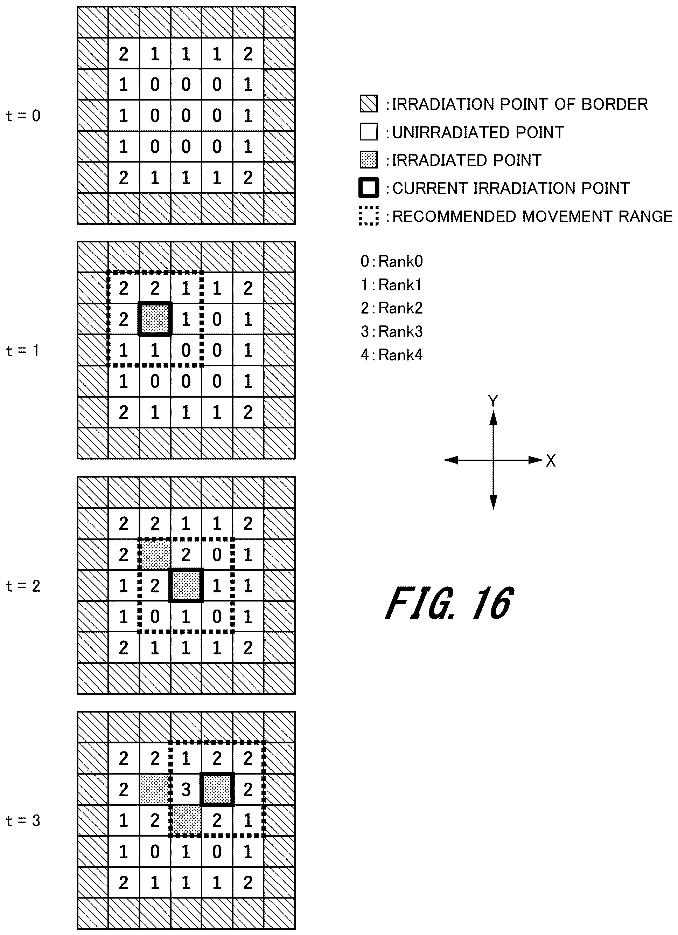

Next, an irradiation order of the electron beam L1 based on the ranks and the recommended movement range will be described with reference to FIGS. 16 to 22.

FIGS. 16 to 22 are views illustrating the beam irradiation order based on the ranks and the recommended movement range.

Points to be irradiated with the electron beam L1 illustrated in FIGS. 16 to 22 are arranged in the first direction X and the second direction Y. Further, a border is formed in a peripheral edge portion of a region (part to be built) irradiated with the electron beam L1.

In FIG. 16, t = 0 is a timing before the first irradiation of the electron beam L1. A total number of a plurality of unirradiated points at t = 0 is 25, for example. At t = 0, the rank determination unit 31 determines ranks of the unirradiated points. The rank determination unit 31 determines a total number of irradiated points at four upper, lower, left, and right points adjacent to an unirradiated point to be ranked as a rank number. Therefore, the ranks are divided into five types of "Rank0" to "Rank4".

Numbers illustrated in FIGS. 16 to 22 indicate ranks of then unirradiated points. Further, the recommended movement range is set to a square. Lengths of the recommended movement range in the first direction X and the second direction Y correspond to three points irradiated with the electron beam L1. At t = 0, the irradiation position determination unit 32 determines one of a plurality of unirradiated points of "Rank0" as the next irradiation position.

At t = 1, the beam deflector 10 irradiates the unirradiated point determined as the next irradiation position with the electron beam L1. The unirradiated point irradiated with the electron beam L1 becomes an irradiated point. The rank determination unit 31 updates the ranks of the unirradiated points. At t = 1, the irradiation position determination unit 32 determines an unirradiated point of "Rank0" included in the recommended movement range as the next irradiation position.

At t = 2, the beam deflector 10 irradiates the unirradiated point determined as the next irradiation position at t = 1 with the electron beam L1. The unirradiated point irradiated with the electron beam L1 becomes an irradiated point. The rank determination unit 31 updates the ranks of the unirradiated points. At t = 2, the irradiation position determination unit 32 selects one of a plurality of unirradiated points of "Rank0" included in the recommended movement range based on a predetermined parameter as the next irradiation position.

At t = 3, the beam deflector 10 irradiates the unirradiated point determined as the next irradiation position at t = 2 with the electron beam L1. The unirradiated point irradiated with the electron beam L1 becomes an irradiated point. The rank determination unit 31 updates the ranks of the unirradiated points.

At t = 3, there is no unirradiated point of "Rank0" inside the recommended movement range. On the other hand, there are a plurality of unirradiated points of "Rank0" outside the recommended movement range. Therefore, the irradiation position determination unit 32 determines a point closest to the center of the recommended movement range among the plurality of unirradiated points of "Rank0" outside the recommended movement range as the next irradiation position.

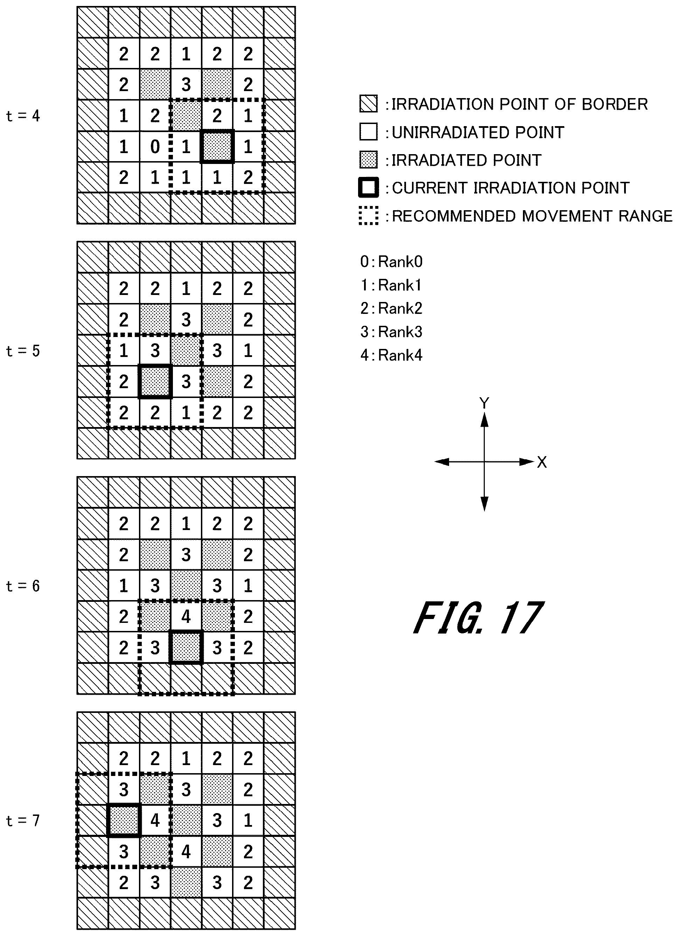

At t = 4 illustrated in FIG. 17, the beam deflector 10 irradiates the unirradiated point determined as the next irradiation position at t = 3 with the electron beam L1. The unirradiated point irradiated with the electron beam L1 becomes an irradiated point. The rank determination unit 31 updates the ranks of the unirradiated points. At t = 4, there is no unirradiated point of "Rank0" inside the recommended movement range. On the other hand, there is an unirradiated point of "Rank0" outside the recommended movement range. Therefore, the irradiation position determination unit 32 determines the unirradiated point of "Rank0" outside the recommended movement range as the next irradiation position.

At t = 5, the beam deflector 10 irradiates the unirradiated point determined as the next irradiation position at t = 4 with the electron beam L1. The unirradiated point irradiated with the electron beam L1 becomes an irradiated point. The rank determination unit 31 updates the ranks of the unirradiated points.

At t = 5, there is no unirradiated point of "Rank0" among a plurality of remaining unirradiated points. Therefore, the irradiation position determination unit 32 sets unirradiated points of "Rank1" having the next highest priority as candidates for the next irradiation position. The irradiation position determination unit 32 selects one of the plurality of unirradiated points of "Rank1" included in the recommended movement range based on a predetermined parameter as the next irradiation position.

At t = 6, the beam deflector 10 irradiates the unirradiated point determined as the next irradiation position at t = 5 with the electron beam L1. The unirradiated point irradiated with the electron beam L1 becomes an irradiated point. The rank determination unit 31 updates the ranks of the unirradiated points.

At t = 6, there is no unirradiated point of "Rank1" inside the recommended movement range. On the other hand, there are unirradiated points of "Rank1" outside the recommended movement range. Therefore, the irradiation position determination unit 32 determines a point closest to the center of the recommended movement range among the plurality of unirradiated points of "Rank1" outside the recommended movement range as the next irradiation position. Note that there are a plurality of unirradiated points of "Rank1" closest to the center of the recommended movement range. In this case, the irradiation position determination unit 32 selects one unirradiated point based on a predetermined parameter (for example, prioritizing the upper left one) as the next irradiation position.

At t = 7, the beam deflector 10 irradiates the unirradiated point determined as the next irradiation position at t = 6 with the electron beam L1. The unirradiated point irradiated with the electron beam L1 becomes an irradiated point. The rank determination unit 31 updates the ranks of the unirradiated points.

At t = 7, there is no unirradiated point of "Rank1" inside the recommended movement range. On the other hand, there are unirradiated points of "Rank1" outside the recommended movement range. Therefore, the irradiation position determination unit 32 determines a point closest to the center of the recommended movement range among the plurality of unirradiated points of "Rank1" outside the recommended movement range as the next irradiation position.

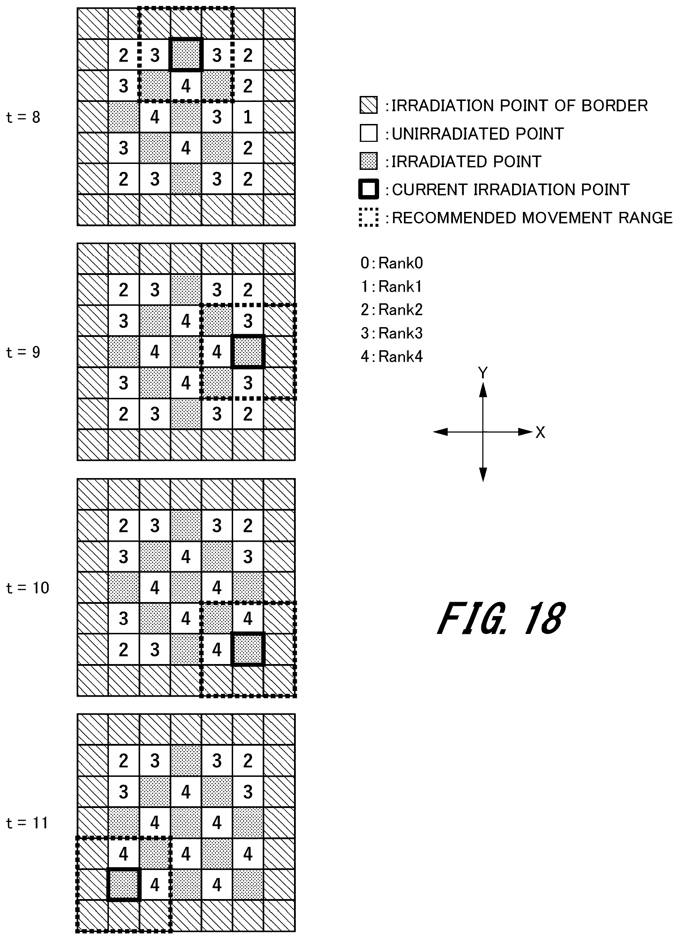

At t = 8 illustrated in FIG. 18, the beam deflector 10 irradiates the unirradiated point determined as the next irradiation position at t = 7 with the electron beam L1. The unirradiated point irradiated with the electron beam L1 becomes an irradiated point. The rank determination unit 31 updates the ranks of the unirradiated points. At t = 8, there is no unirradiated point of "Rank1" inside the recommended movement range. On the other hand, there are unirradiated points of "Rank1" outside the recommended movement range. Therefore, the irradiation position determination unit 32 determines the unirradiated point of "Rank1" outside the recommended movement range as the next irradiation position.

At t = 9, the beam deflector 10 irradiates the unirradiated point determined as the next irradiation position at t = 8 with the electron beam L1. The unirradiated point irradiated with the electron beam L1 becomes an irradiated point. The rank determination unit 31 updates the ranks of the unirradiated points. At t = 9, there is no unirradiated point of "Rank0" or "Rank1" among a plurality of remaining unirradiated points. Therefore, the irradiation position determination unit 32 sets unirradiated points of "Rank2" having the next highest priority as candidates for the next irradiation position.

At t = 9, there is no unirradiated point of "Rank2" inside the recommended movement range. On the other hand, there are unirradiated points of "Rank2" outside the recommended movement range. Therefore, the irradiation position determination unit 32 determines a point closest to the center of the recommended movement range among the plurality of unirradiated points of "Rank2" outside the recommended movement range as the next irradiation position.

At t = 10, the beam deflector 10 irradiates the unirradiated point determined as the next irradiation position at t = 9 with the electron beam L1. The unirradiated point irradiated with the electron beam L1 becomes an irradiated point. The rank determination unit 31 updates the ranks of the unirradiated points.

At t = 10, there is no unirradiated point of "Rank2" inside the recommended movement range. On the other hand, there are unirradiated points of "Rank2" outside the recommended movement range. Therefore, the irradiation position determination unit 32 determines a point closest to the center of the recommended movement range among the plurality of unirradiated points of "Rank2" outside the recommended movement range as the next irradiation position.

At t = 11, the beam deflector 10 irradiates the unirradiated point determined as the next irradiation position at t = 10 with the electron beam L1. The unirradiated point irradiated with the electron beam L1 becomes an irradiated point. The rank determination unit 31 updates the ranks of the unirradiated points.

At t = 11, there is no unirradiated point of "Rank2" inside the recommended movement range. On the other hand, there are unirradiated points of "Rank2" outside the recommended movement range. Therefore, the irradiation position determination unit 32 determines a point closest to the center of the recommended movement range among the plurality of unirradiated points of "Rank2" outside the recommended movement range as the next irradiation position.

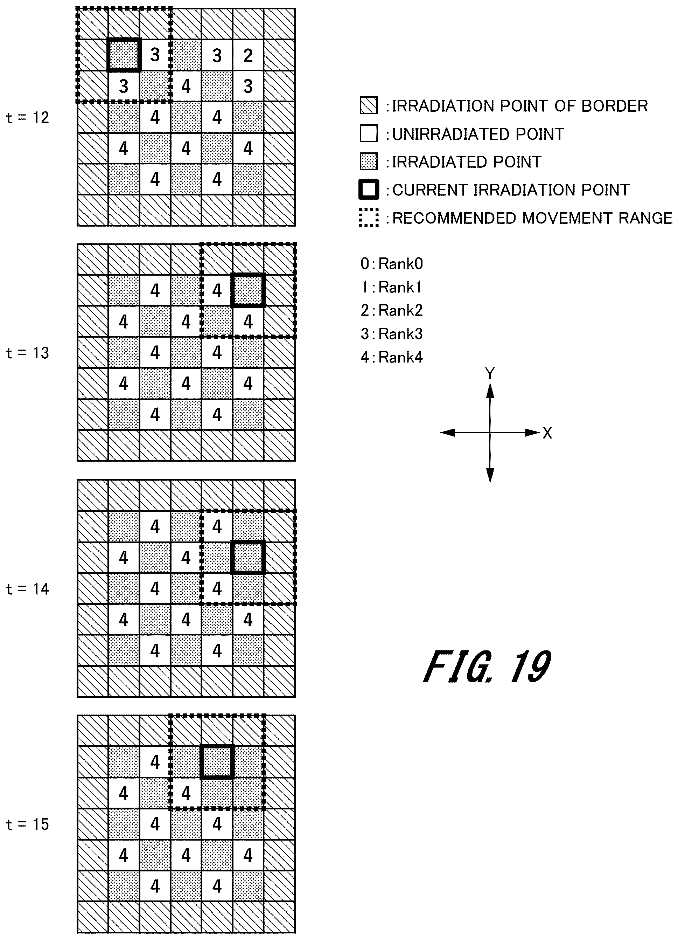

At t = 12 illustrated in FIG. 19, the beam deflector 10 irradiates the unirradiated point determined as the next irradiation position at t = 11 with the electron beam L1. The unirradiated point irradiated with the electron beam L1 becomes an irradiated point. The rank determination unit 31 updates the ranks of the unirradiated points. At t = 12, there is no unirradiated point of "Rank2" inside the recommended movement range. On the other hand, there are unirradiated points of "Rank2" outside the recommended movement range. Therefore, the irradiation position determination unit 32 determines the unirradiated point of "Rank2" outside the recommended movement range as the next irradiation position.

At t = 13, the beam deflector 10 irradiates the unirradiated point determined as the next irradiation position at t = 12 with the electron beam L1. The unirradiated point irradiated with the electron beam L1 becomes an irradiated point. The rank determination unit 31 updates the ranks of the unirradiated points.

At t = 13, there is no unirradiated point of "Rank0" to "Rank3" among a plurality of remaining unirradiated points. Therefore, the irradiation position determination unit 32 sets unirradiated points of "Rank4" having the next highest priority as candidates for the next irradiation position. The irradiation position determination unit 32 selects one of the plurality of unirradiated points of "Rank4" included in the recommended movement range based on a predetermined parameter as the next irradiation position.

At t = 14, the beam deflector 10 irradiates the unirradiated point determined as the next irradiation position at t = 13 with the electron beam L1. The unirradiated point irradiated with the electron beam L1 becomes an irradiated point. The rank determination unit 31 updates the ranks of the unirradiated points. The irradiation position determination unit 32 selects one of the plurality of unirradiated points of "Rank4" included in the recommended movement range based on a predetermined parameter as the next irradiation position.

At t = 15, the beam deflector 10 irradiates the unirradiated point determined as the next irradiation position at t = 14 with the electron beam L1. The unirradiated point irradiated with the electron beam L1 becomes an irradiated point. The rank determination unit 31 updates the ranks of the unirradiated points. At t = 15, the irradiation position determination unit 32 sets an unirradiated point of "Rank4" included in the recommended movement range as the next irradiation position.

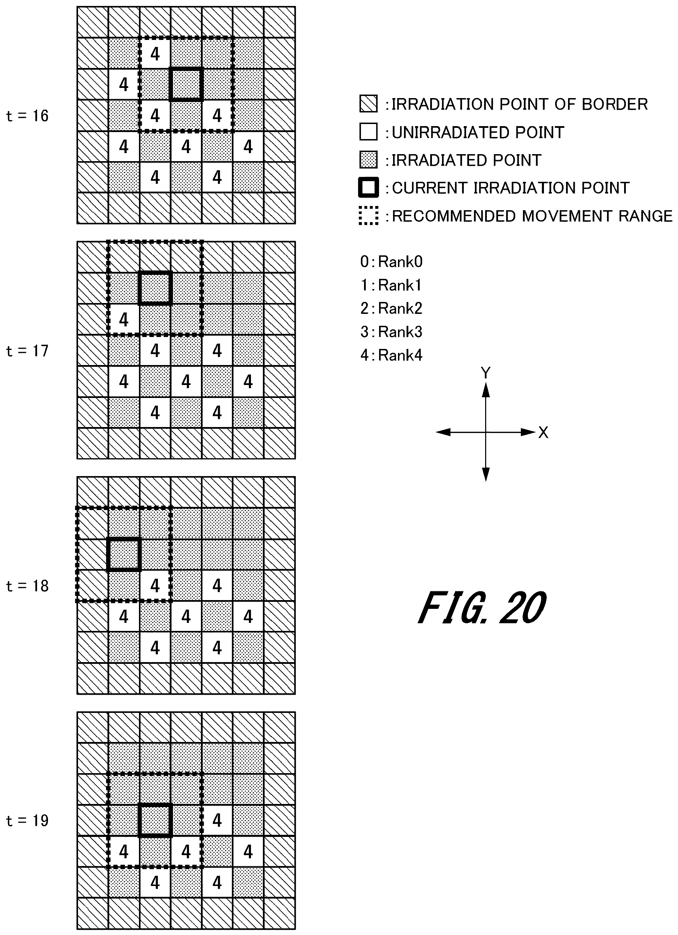

At t = 16 illustrated in FIG. 20, the beam deflector 10 irradiates the unirradiated point determined as the next irradiation position at t = 15 with the electron beam L1. The unirradiated point irradiated with the electron beam L1 becomes an irradiated point. The rank determination unit 31 updates the ranks of the unirradiated points. At t = 16, the irradiation position determination unit 32 selects one of a plurality of unirradiated points of "Rank4" included in the recommended movement range based on a predetermined parameter as the next irradiation position.

At t = 17, the beam deflector 10 irradiates the unirradiated point determined as the next irradiation position at t = 16 with the electron beam L1. The unirradiated point irradiated with the electron beam L1 becomes an irradiated point. The rank determination unit 31 updates the ranks of the unirradiated points. At t = 17, the irradiation position determination unit 32 sets an unirradiated point of "Rank4" included in the recommended movement range as the next irradiation position.

At t = 18, the beam deflector 10 irradiates the unirradiated point determined as the next irradiation position at t = 17 with the electron beam L1. The unirradiated point irradiated with the electron beam L1 becomes an irradiated point. The rank determination unit 31 updates the ranks of the unirradiated points. At t = 18, the irradiation position determination unit 32 sets an unirradiated point of "Rank4" included in the recommended movement range as the next irradiation position.

At t = 19, the beam deflector 10 irradiates the unirradiated point determined as the next irradiation position at t = 18 with the electron beam L1. The unirradiated point irradiated with the electron beam L1 becomes an irradiated point. The rank determination unit 31 updates the ranks of the unirradiated points. At t = 19, the irradiation position determination unit 32 selects one of a plurality of unirradiated points of "Rank4" included in the recommended movement range based on a predetermined parameter as the next irradiation position.

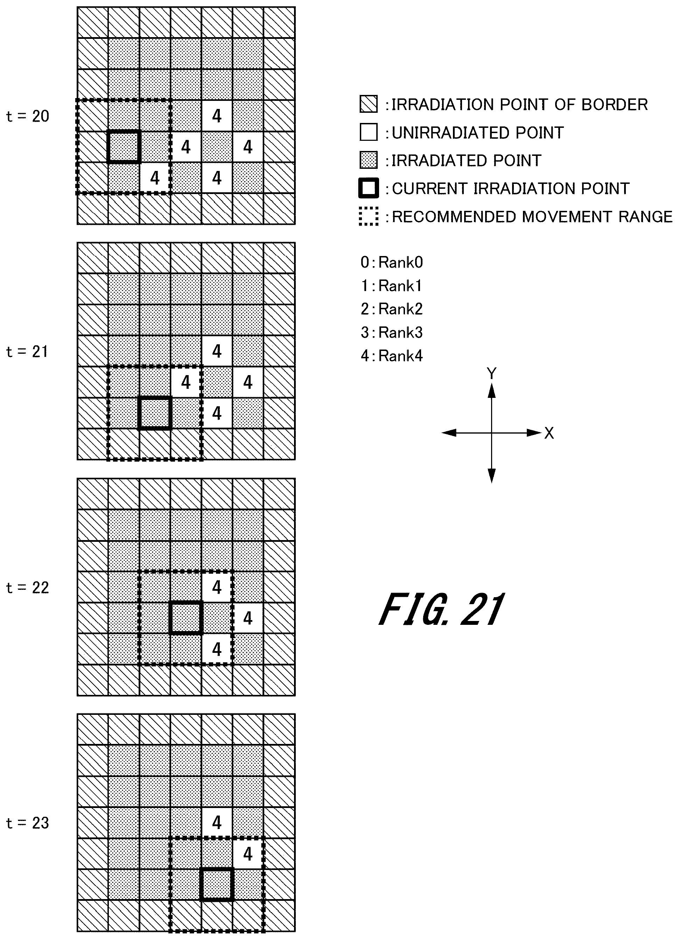

At t = 20 illustrated in FIG. 21, the beam deflector 10 irradiates the unirradiated point determined as the next irradiation position at t = 19 with the electron beam L1. The unirradiated point irradiated with the electron beam L1 becomes an irradiated point. The rank determination unit 31 updates the ranks of the unirradiated points. At t = 20, the irradiation position determination unit 32 sets an unirradiated point of "Rank4" included in the recommended movement range as the next irradiation position.

At t = 21, the beam deflector 10 irradiates the unirradiated point determined as the next irradiation position at t = 20 with the electron beam L1. The unirradiated point irradiated with the electron beam L1 becomes an irradiated point. The rank determination unit 31 updates the ranks of the unirradiated points. At t = 21, the irradiation position determination unit 32 sets an unirradiated point of "Rank4" included in the recommended movement range as the next irradiation position.

At t = 22, the beam deflector 10 irradiates the unirradiated point determined as the next irradiation position at t = 21 with the electron beam L1. The unirradiated point irradiated with the electron beam L1 becomes an irradiated point. The rank determination unit 31 updates the ranks of the unirradiated points. At t = 22, the irradiation position determination unit 32 selects one of a plurality of unirradiated points of "Rank4" included in the recommended movement range based on a predetermined parameter as the next irradiation position.

At t = 23, the beam deflector 10 irradiates the unirradiated point determined as the next irradiation position at t = 22 with the electron beam L1. The unirradiated point irradiated with the electron beam L1 becomes an irradiated point. The rank determination unit 31 updates the ranks of the unirradiated points. At t = 23, the irradiation position determination unit 32 sets an unirradiated point of "Rank4" included in the recommended movement range as the next irradiation position.

At t = 24, the beam deflector 10 irradiates the unirradiated point determined as the next irradiation position at t = 23 with the electron beam L1. The unirradiated point irradiated with the electron beam L1 becomes an irradiated point. The rank determination unit 31 updates the ranks of the unirradiated points. At t = 24, the irradiation position determination unit 32 sets an unirradiated point of "Rank4" included in the recommended movement range as the next irradiation position.

At t = 25, the beam deflector 10 irradiates the last unirradiated point determined as the next irradiation position at t = 24 with the electron beam L1. The unirradiated point irradiated with the electron beam L1 becomes an irradiated point. As a result, all the unirradiated points have been irradiated with the electron beam L1, and beam irradiation processing in one layer of the powder material M1 is completed.

As described above, in the present embodiment, the rank determination unit 31 determines the rank of each of the unirradiated points (positions) based on a molten state of the periphery. The irradiation position determination unit 32 refers to the ranks of the unirradiated points, and preferentially determines an unirradiated point whose periphery is in a less molten state as the next irradiation position. As a result, a uniform molten surface can be formed by discretely irradiating one layer of the powder material M1 with the electron beam L1. As a result, the quality of an object (three-dimensional structure) to be built can be improved.

Further, the irradiation position determination unit 32 preferentially determines an unirradiated point included in the recommended movement range among the unirradiated points whose periphery are in a less molten state as the next irradiation position. As a result, it is possible to suppress the electron beam L1 from being greatly changed. As a result, the settling time can be shortened, and a time for powder bed fusion additive manufacturing can be shortened.

### [Beam Irradiation Processing]

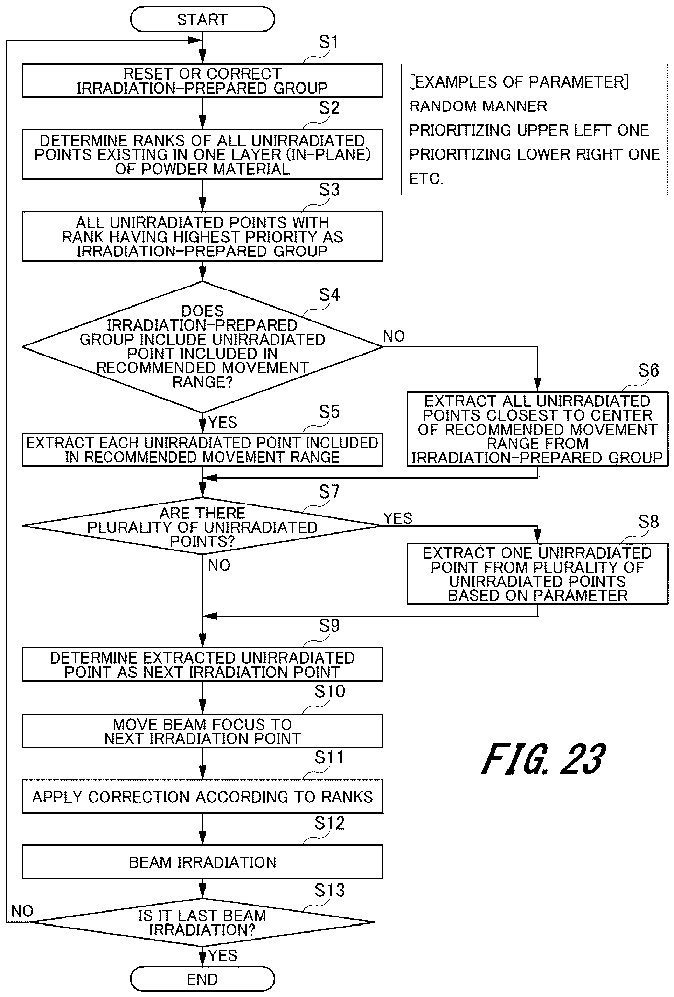

Next, the beam irradiation processing performed by the beam deflector 10 and the control apparatus 30 of the three-dimensional PBF-AM apparatus 1 will be described with reference to FIG. 23.

FIG. 23 is a flowchart illustrating an example of the beam irradiation processing.

First, the irradiation position determination unit 32 of the control apparatus 30 resets an irradiation-prepared group or corrects the irradiation-prepared group (S1). The irradiation-prepared group is a group of unirradiated points that are candidates for the next irradiation position.

In a case where one layer of the powder material M1 is irradiated with the electron beam L1 for the first time, the irradiation-prepared group used in a layer immediately below may remain in the storage unit 34 (for example, a RAM of the storage unit 34). In a case where one layer of the powder material M1 is irradiated with the electron beam L1 for the second and subsequent times, the irradiation-prepared group used in the previous irradiation with the electron beam L1 may remain in the storage unit 34. Therefore, the irradiation position determination unit 32 resets (deletes) the irradiation-prepared group remaining in the storage unit 34.

Next, the rank determination unit 31 determines ranks of all unirradiated points existing in one layer (in-plane) of the powder material M1 (S2). Subsequently, the irradiation position determination unit 32 sets all unirradiated points having the highest priority among a plurality of (one in the last time) ranked unirradiated points as the irradiation-prepared group (S3).

Next, the irradiation position determination unit 32 determines whether or not the irradiation-prepared group includes an unirradiated point included in the recommended movement range (S4). When it is determined in step S4 that the irradiation-prepared group includes an unirradiated point included in the recommended movement range (YES in S4), the irradiation position determination unit 32 extracts each unirradiated point of the irradiation-prepared group included in the recommended movement range (S5) .

When it is determined in step S4 that the irradiation-prepared group does not include an unirradiated point included in the recommended movement range (NO in S4), the irradiation position determination unit 32 extracts all unirradiated points closest to the center of the recommended movement range from the irradiation-prepared group (S6).

After the processing in step S5 or step S6, the irradiation position determination unit 32 determines whether or not a plurality of unirradiated points have been extracted (S7). When it is determined in step S7 that a plurality of unirradiated points have been extracted (YES in S7), the irradiation position determination unit 32 extracts one unirradiated point from the plurality of unirradiated points based on a predetermined parameter (S8).

When it is determined in step S7 that a plurality of unirradiated points have not been extracted (NO in S7), or after the processing in step S8, the irradiation position determination unit 32 determines the single extracted unirradiated point as the next irradiation position (S9).

Next, the irradiation position determination unit 32 transmits a position control signal to the beam deflector 10 to move the focus of the electron beam L1 to the next irradiation position (S10). Next, the beam correction unit 33 determines a correction of the electron beam L1 according to a rank of the unirradiated point as the next irradiation position, and applies the correction to the beam deflector 10 and the electron gun 2 (S11).

Next, the control apparatus 30 controls driving of the electron gun 2 to emit the electron beam L1 from the electron gun 2 (S12). As a result, the next irradiation position is irradiated with the appropriately corrected electron beam L1. Next, the control apparatus 30 determines whether or not it is the last beam irradiation in the layer of the powder material M1 (S13).

When it is determined in step S13 that it is not the last beam irradiation in the layer of the powder material M1 (NO in S13), the control apparatus 30 returns the processing to step S1. The control apparatus 30 performs the processing from step S1 to step S9 while the next irradiation position is irradiated with the electron beam L1.

When it is determined in step S13 that it is the last beam irradiation in the layer of the powder material M1 (YES in S13), the control apparatus 30 ends the beam irradiation processing in the layer of the powder material M1. Thereafter, when the next layer of the layer of the powder material M1 is formed, the control apparatus 30 starts the beam irradiation processing in the next layer of the powder material M1.

### [Irradiation Order Data]

A rank of each unirradiated point updated every time the electron beam L1 is irradiated and the next irradiation position determined based on the rank can be determined in advance before the beam irradiation processing is started. Therefore, the rank determination unit 31 and the irradiation position determination unit 32 may determine in advance irradiation order data defining irradiation positions from the first irradiation to the last irradiation in each layer of the powder material M1 and ranks of the irradiation positions.

The rank determination unit 31 obtains all irradiation positions (coordinates to be irradiated) from build data for forming an object to be built. The build data is supplied to the control apparatus 30 via a communication line, for example, and is stored in the storage unit 34 of the control apparatus 30. Further, the build data may be recorded on a recording medium readable by the control apparatus 30 and supplied to the control apparatus 30 via the recording medium.

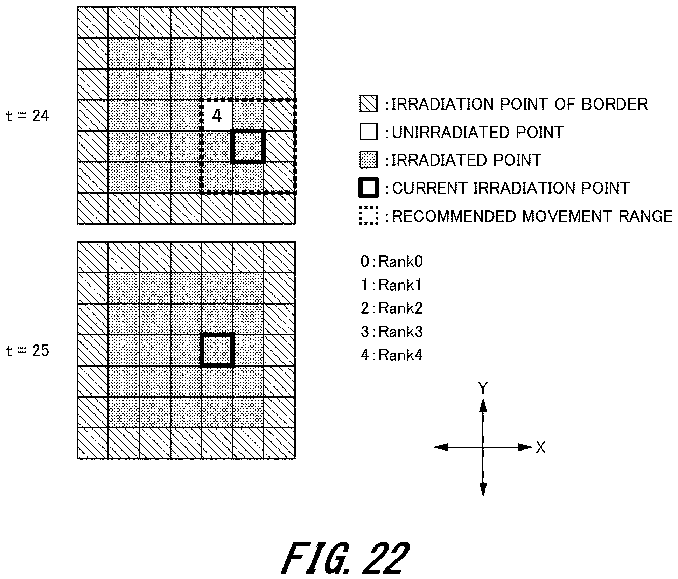

The irradiation order data is generated by repeating steps S1 to S9 in the above-described beam irradiation processing (see FIG. 22). First, the rank determination unit 31 determines ranks of unirradiated points in one layer of the powder material M1. Next, the irradiation position determination unit 32 determines the first beam irradiation position (next irradiation position) based on the ranks determined by the rank determination unit 31. As a result, the first beam irradiation position and the rank thereof in the layer of the powder material M1 are determined.

Next, the rank determination unit 31 changes the first beam irradiation position to an irradiated point and determines ranks of unirradiated points. Next, the irradiation position determination unit 32 determines the second beam irradiation position (next irradiation position) based on the ranks determined by the rank determination unit 31. As a result, the second beam irradiation position and the rank thereof in the layer of the powder material M1 are determined.

The rank determination unit 31 and the irradiation position determination unit 32 repeat the determination of ranks and an irradiation position until the last beam irradiation position in the layer of the powder material M1 and the rank thereof are determined. As described above, the rank determination unit 31 and the irradiation position determination unit 32 determine all the beam irradiation positions in each layer of the powder material M1 and the ranks thereof. As a result, the irradiation order data is generated. The rank determination unit 31 and the irradiation position determination unit 32 store the generated irradiation order data in the storage unit.

In a case where the irradiation order data is provided, steps S9 to S13 in the above-described beam irradiation processing (see FIG. 22) are performed. In step S9, the irradiation position determination unit 32 determines the beam irradiation position (next irradiation position) with reference to the irradiation order data. In step S11, the rank of the beam irradiation position (next irradiation position) is acquired with reference to the irradiation order data, and a correction of the electron beam L1 according to the rank is determined with reference to the correction table.

Note that the irradiation order data may include a correction coefficient (correction amount) for each of the beam irradiation positions. In this case, the beam correction unit 33 refers to the irradiation order data and determines the correction coefficient (correction amount) for each of the beam irradiation positions.

Further, the irradiation order data is not limited to being generated by the control apparatus 30. For example, a build data creation apparatus that creates build data may generate the irradiation order data. The irradiation order data is supplied to the control apparatus 30 via a communication line and stored in the storage unit 34 of the control apparatus 30. Further, the irradiation order data may be recorded on a recording medium readable by the control apparatus 30 and supplied to the control apparatus 30 via the recording medium.

The embodiment of the present invention have been described above. However, the present invention is not limited to the above-described embodiment, and various modifications can be made without departing from the gist of the invention described in the claims. For example, the above-described embodiment describes the present invention in detail in an easy-to-understand manner, and the present invention is not necessarily limited to one having all the described configurations. Further, some configurations of a certain embodiment can be replaced with configurations of another embodiment, and configurations of a certain embodiment can be added to the configurations of another embodiment. Further, it is possible to add, delete, and replace other configurations for some configurations of each embodiment.

In the above-described embodiment, positions irradiated with the electron beam L1 are arranged along the first direction X and the second direction Y that intersect substantially perpendicularly. However, the positions irradiated with the electron beam L1 according to the present invention may be arranged along two directions intersecting at any angle.

Although the example in which the electron gun 2 that emits the electron beam L1 is applied as the beam emitter has been described in the above-described embodiment, the present invention is not limited thereto. For example, an irradiation gun that emits a laser beam may be employed as the beam emitter according to the present invention. In this case, an unirradiated point of the powder material M1 may be irradiated with the laser beam to be melted and coagulated.

### Reference Signs List

- 1: Three-dimensional powder bed fusion additive manufacturing (PBF-AM) apparatus
- 2: Electron gun (beam emitter)
- 3: Deflection amplifier
- 4: Lens
- 5: Powder material storage
- 6: Stage
- 7: Powder layer raking arm
- 8: Coordinate conversion correction circuit
- 10: Beam deflector
- 21: Emitter
- 22: Extraction electrode
- 23: Acceleration electrode
- 24: Acceleration power source
- 30: Controller
- 31: Rank determination unit
- 32: Irradiation position determination unit
- 33: Beam correction unit
- 34: Storage unit
- D1, D2, D3, D4: Designated range
- L1: Electron beam
- M1: Powder material
- S1, S2: Recommended movement range

## Claims

1. A three-dimensional powder bed fusion additive manufacturing (PBF-AM) apparatus (1) comprising:
a stage (6) on which a powder layer formed of a powder material is spread;
a beam emitter (2) configured to emit a beam toward the powder layer spread on the stage (6);
a beam deflector (10) configured to deflect the beam emitted from the beam emitter (2); and
a controller (30) configured to control the beam deflector (10),
wherein the controller (30) determines a next irradiation position, which is a position to be irradiated with the beam next, based on a rank assigned to each of unirradiated positions that have not yet been irradiated with the beam, and controls the beam deflector (10) to irradiate the next irradiation position with the beam, and
the rank is determined based on a molten state around each of the unirradiated positions, and is updated every time the beam is emitted.

2. The three-dimensional PBF-AM apparatus (1) according to claim 1, wherein the controller (30) determines the next irradiation position based on a recommended movement range in which a settling time is unnecessary for deflecting the beam.

3. The three-dimensional PBF-AM apparatus (1) according to claim 2, wherein the recommended movement range is an inner side of a rectangle or a circle centered on a most recent beam irradiation position.

4. The three-dimensional PBF-AM apparatus (1) according to claim 2, wherein, when a plurality of the unirradiated positions assigned with the highest rank having a highest priority among a plurality of the ranks then are present inside the recommended movement range, the controller (30) sets one of the plurality of unirradiated positions as the next irradiation position based on a predetermined parameter.

5. The three-dimensional PBF-AM apparatus (1) according to claim 2, wherein, when the unirradiated position assigned with the highest rank with a highest priority among a plurality of the ranks then is not present inside the recommended movement range, the controller (30) sets, as the next irradiation position, the unirradiated position assigned with the highest rank and closest to a center of the recommended movement range outside the recommended movement range.

6. The three-dimensional PBF-AM apparatus (1) according to claim 5, wherein, when there are a plurality of the unirradiated positions assigned with the highest rank and closest to the center of the recommended movement range outside the recommended movement range, the controller (30) sets one of the plurality of unirradiated position as the next irradiation position based on a predetermined parameter.

7. The three-dimensional PBF-AM apparatus (1) according to claim 1, wherein the rank has a lower priority as a proportion of a region irradiated with the beam inside a designated range centered on each of the unirradiated positions increases.

8. The three-dimensional PBF-AM apparatus (1) according to claim 1, wherein the rank has a lower priority as a number of points irradiated with the beam inside a designated range centered on each of the unirradiated positions increases.

9. The three-dimensional PBF-AM apparatus (1) according to any preceding claim, wherein the controller (30) includes a beam correction unit (33) configured to correct the beam in accordance with the rank of the next irradiation position when the next irradiation position is irradiated with the beam.

10. The three-dimensional PBF-AM apparatus (1) according to claim 9, wherein the beam correction unit (33) corrects at least one of an intensity of the beam, a diameter of the beam, and an irradiation time of the beam.

11. The three-dimensional PBF-AM apparatus (1) according to according to any preceding claim, wherein the controller (30) includes a rank determination unit (31) configured to determine the rank.

12. The three-dimensional PBF-AM apparatus (1) according to any preceding claim, wherein the controller (30) includes a storage unit (34) configured to store irradiation order data including a plurality of the next irradiation positions determined based on the rank of each of the unirradiated positions and ranks of the plurality of next irradiation positions.

13. The three-dimensional PBF-AM apparatus (1) according to claim 12, wherein the irradiation order data includes correction data for correcting the beam with which the plurality of next irradiation positions are irradiated, and
the correction data is defined in accordance with the ranks of the plurality of next irradiation positions.

14. The three-dimensional PBF-AM apparatus (1) according to claim 13, wherein the correction data is data for correcting at least one of an intensity of the beam, a diameter of the beam, and an irradiation time of the beam.

15. A three-dimensional powder bed fusion additive manufacturing method comprising:
determining, by a rank determination unit (31), a rank of each of unirradiated positions based on a molten state around each of the unirradiated positions that have not yet been irradiated with a beam;
determining, by an irradiation position determination unit (32), a next irradiation position, which is a position to be irradiated with the beam next, based on the rank; and
controlling a beam deflector (10) to irradiate the next irradiation position with the beam,
wherein the rank of each of the unirradiated positions is determined by the rank determination unit (31) every time the beam is emitted.
